(19) Europäisches Patentamt / European Patent Office / Office européen des brevets

(11) **EP 3 475 868 B1**

(12) **EUROPEAN PATENT SPECIFICATION**

(45) Date of publication and mention of the grant of the patent:
**21.07.2021 Bulletin 2021/29**

(21) Application number: **17733286.3**

(22) Date of filing: **15.06.2017**

(51) Int Cl.:
*G06F 21/60* (2013.01)     *G06N 20/00* (2019.01)

(86) International application number:
**PCT/US2017/037577**

(87) International publication number:
**WO 2017/222902 (28.12.2017 Gazette 2017/52)**

(54) **PRIVACY-PRESERVING MACHINE LEARNING**

MASCHINELLES LERNEN MIT BEWAHRUNG DES DATENSCHUTZES

APPRENTISSAGE AUTOMATIQUE À RESPECT DE LA VIE PRIVÉE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.06.2016 GB 201610883**
**23.08.2016 US 201615245141**

(43) Date of publication of application:
**01.05.2019 Bulletin 2019/18**

(73) Proprietor: **Microsoft Technology Licensing, LLC Redmond, WA 98052-6399 (US)**

(72) Inventors:
- **COSTA, Manuel Silverio da Silva**
  **Redmond, Washington 98052-6399 (US)**
- **FOURNET, Cédric Alain Marie Christophe**
  **Redmond, Washington 98052-6399 (US)**
- **MEHTA, Aastha**
  **Redmond, Washington 98052-6399 (US)**
- **NOWOZIN, Sebastian**
  **Redmond, Washington 98052-6399 (US)**
- **OHRIMENKO, Olga**
  **Redmond, Washington 98052-6399 (US)**
- **SCHUSTER, Felix**
  **Redmond, Washington 98052-6399 (US)**
- **VASWANI, Kapil**
  **Redmond, Washington 98052-6399 (US)**

(74) Representative: **CMS Cameron McKenna Nabarro Olswang LLP**
**Cannon Place**
**78 Cannon Street**
**London EC4N 6AF (GB)**

(56) References cited:
**US-A1- 2011 211 692     US-A1- 2012 233 460**
**US-A1- 2014 007 250**

- **VALERIA NIKOLAENKO ET AL: "Privacy-Preserving Ridge Regression on Hundreds of Millions of Records", SECURITY AND PRIVACY (SP), 2013 IEEE SYMPOSIUM ON, IEEE, 19 May 2013 (2013-05-19), pages 334-348, XP032431333, DOI: 10.1109/SP.2013.30 ISBN: 978-1-4673-6166-8**

## Description

BACKGROUND

Where third party cloud computing systems are used to execute machine learning code on large volumes of data there are significant security and privacy concerns. Use of a third party computing system in the cloud provides flexibility to the user as they

control over the infrastructure within the cloud computing system does lead to security and/or privacy concerns. In particular, users may wish to maintain the confidentiality and integrity of the data which is processed by the code, and the outputs of the machine learning. Currently however, a malicious system administrator, or other malicious observer of the cloud computing system, is able to observe patterns of memory accesses, patterns of disk accesses and patterns of network accesses and use those observations to find details about the confidential data.

The embodiments described below are not limited to implementations which solve any or all of the disadvantages of known privacy-preserving systems.

US 2011/211692A1 describes a server module which evaluates a circuit based on concealed inputs provided by respective participant modules, to provide a concealed output. By virtue of this approach, no party to the transaction (including the sever module) discovers any other party's non-concealed inputs. In a first implementation, the server module evaluates a garbled Boolean circuit. This implementation also uses a three-way oblivious transfer technique to provide a concealed input from one of the participant modules to the serer module. In a second implementation, the server module evaluates an arithmetic circuit based on ciphertexts that have been produced using a fully homomorphic encryption technique. This implementation modifies multiplication operations that are performed in the evaluation of the arithmetic circuit by a modifier factor; this removes bounds placed on the number of the multiplication operations that can be performed.

US 2012/233460 A1 is further prior art.

SUMMARY

According to aspects of the present invention there is provided a multi-party privacy-preserving machine learning system as defined in claim 1 and a method at a multi-party privacy-preserving machine learning system as defined in claim 14.

The following presents a simplified summary of the disclosure in order to provide a basic understanding to the reader. This summary is not intended to identify key features or essential features of the claimed subject matter nor is it intended to be used to limit the scope of the claimed subject matter. Its sole purpose is to present a selection of concepts disclosed herein in a simplified form as a prelude to the more detailed description that is presented later.

A multi-party privacy-preserving machine learning system is described which has a trusted execution environment comprising at least one protected memory region. A code loader at the system loads machine learning code, received from at least one of the parties, into the protected memory region. A data uploader uploads confidential data, received from at least one of the parties, to the protected memory region. The trusted execution environment executes the machine learning code using at least one data-oblivious procedure to process the confidential data and returns the result to at least one of the parties, where a data-oblivious procedure is a process where any patterns of memory accesses, patterns of disk accesses and patterns of network accesses are such that the confidential data cannot be predicted from the patterns.

Many of the attendant features will be more readily appreciated as the same becomes better understood by reference to the following detailed description considered in connection with the accompanying drawings.

DESCRIPTION OF THE DRAWINGS

The present description will be better understood from the following detailed description read in light of the accompanying drawings, wherein:

FIG. 1 is a schematic diagram of a privacy-preserving machine learning system;
FIG. 2 is a schematic diagram of another privacy-preserving machine learning system;
FIG. 3 is a flow diagram of a method of operation at a privacy-preserving machine learning system;
FIG. 4 is a schematic diagram of a cache line array;
FIG. 5 is a flow diagram of a method of clustering together with a data-oblivious method of clustering;
FIG. 6 is a flow diagram of a method of supervised machine learning together with a data-oblivious method of supervised machine learning;
FIG. 7 is a flow diagram of a method of training a support vector machine together with a data-oblivious method of training a support vector machine;

FIG. 8 is a schematic diagram of a random decision forest illustrating a test time evaluation path for a non-oblivious and an oblivious scenario;

FIG. 9 is a flow diagram of a data-oblivious decision forest test time evaluation process;

FIG. 10 is a schematic diagram of a matrix factorization component;

FIG. 11 is a flow diagram of a data-oblivious matrix factorization process;

FIG. 12 is a flow diagram of part of the process of FIG. 11 in more detail;

FIG. 13 illustrates an exemplary computing-based device in which embodiments of a privacy-preserving machine learning system are implemented.

Like reference numerals are used to designate like parts in the accompanying drawings.

DETAILED DESCRIPTION

The detailed description provided below in connection with the appended drawings is intended as a description of the present examples and is not intended to represent the only forms in which the present example are constructed or utilized. The description sets forth the functions of the example and the sequence of operations for constructing and operating the example. However, the same or equivalent functions and sequences may be accomplished by different examples.

Machine learning is increasingly used in a wide variety of applications such as robotics, medical image analysis, human computer interaction, livestock management, agriculture, manufacturing and others. The quality and accuracy of machine learning predictions is typically increased by using greater quantity and variety of training data during a training phase. However, often the training data is difficult and expensive to obtain and is confidential.

In various examples described herein a privacy-preserving machine learning system is provided in the cloud so that multiple parties can contribute their confidential data for use as training data without breaching the confidentiality. This enables higher quality and more accurate machine learning outcomes (either at training time, test time or both) to be achieved. Two or more entities are able to perform collaborative machine learning whilst guaranteeing the privacy of their individual data sets. A new confidential data instance, submitted to the machine learning system is used to generate one or more predictions in a privacy preserving manner. This is achieved without the need for complex cryptographic tools such as fully homomorphic encryption, which introduce large runtime overheads so limiting their practical adoption for machine learning on large data sets.

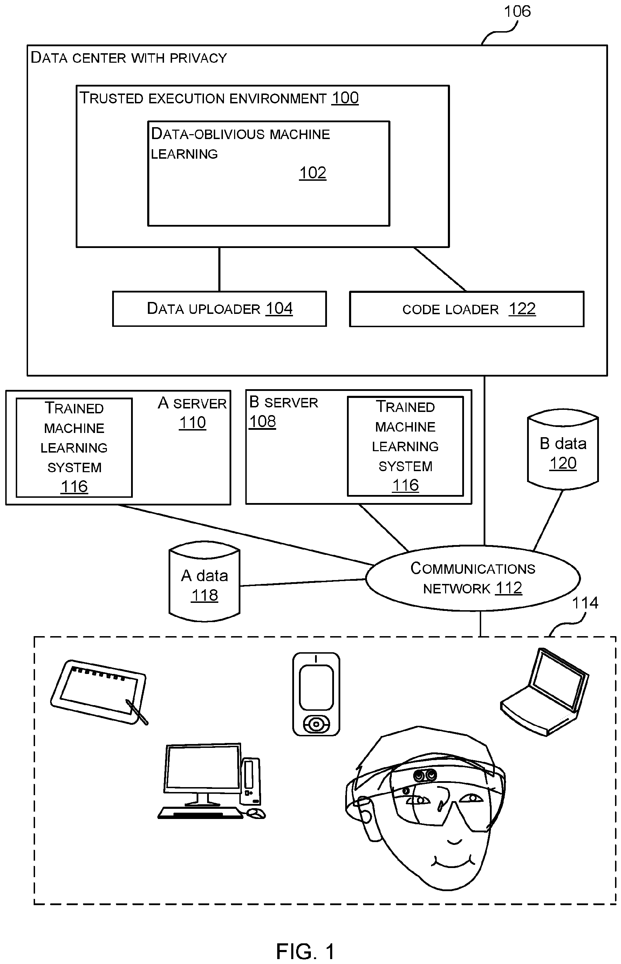

FIG. 1 is a schematic diagram of a privacy-preserving machine learning system comprising a data center 106 comprising at least one trusted execution environment 100 which controls a secure memory region. In this example one trusted execution environment is shown for clarity although in practice many trusted execution environments are deployed and these are at computational units in the data center, such as servers with disk storage or virtual machines which are connected by a network within the data center 106. In an example, the trusted execution environment comprises a secure memory region which is a processor protected memory region within the address space of a regular process. The processor monitors memory accesses to the trusted execution environment so that only code running in a trusted execution environment is able to access data in the trusted execution environment. When inside the physical processor package (in the processor's caches), the trusted execution environment memory is available in plaintext, but it is encrypted and integrity protected when written to system memory (random access memory RAM). External code can only invoke code inside the trusted execution environment at statically defined entry points (using a call-gate like mechanism). In some examples, code inside an trusted execution environment is able to have messages signed using a per-processor private key along with a digest of the trusted execution environment. This enables other trusted entities to verify that messages originated from a trusted execution environment with a specific code and data configuration.

In some examples the trusted execution environment is implemented using hardware such that the secure memory region is isolated from any other code, including operating system and hypervisor. In some examples the trusted execution environment is implemented using a trusted virtual machine.

A malicious adversary, who observes patterns of memory accesses, or patterns of disk accesses, or patterns of network accesses made by the trusted execution environment, is able to obtain confidential information stored in the trusted execution environment, even where the adversary is unable to physically open and manipulate the trusted execution environment. For example, the adversary may control all the hardware in the cloud data center 106, except the processor chips used in the trusted execution environment. In particular the adversary controls the network cards, disks, and other chips in the motherboards. The adversary may record, replay, and modify network packets or files. The adversary may also read or modify data after it left the processor chip using physical probing, direct memory access (DMA), or similar techniques.

The adversary may also control all the software in the data center 106, including the operating system and hypervisor. For instance, the adversary may change the page tables so that any trusted execution environment memory accesses results in a page fault. This active adversary is general enough to model privileged malware running in the operating or hypervisor layers, as well as malicious cloud administrators who may try to access the data by logging into hosts and inspecting disks and memory.

The data center 106 comprises a data uploader 104 which is configured to receive or access data such as confidential data A 118 managed by the operator of server A and confidential data B 120 managed by the operator of server B. The data is encrypted confidential data to be used for machine learning either during a training or test phase. The data uploader 104 is configured in some embodiments to securely shuffle the uploaded data as described in more detail below.

The data center 106 comprises a code loader 122 which is configured to access or receive code from an entity such as server A 110, or server B 108 and to upload the code to the trusted execution environment 100. The code is machine learning code, for example, which has been agreed upon by an operator of server A and an operator of server B. The trusted execution environment is configured to carry out data-oblivious machine learning 102 as it executes data-oblivious machine learning processes on the uploaded data 104. In some examples, the code loader 122 uploads machine learning code comprising data-oblivious machine learning processes. In some examples, the data-oblivious machine learning processes are already stored in the trusted execution environment and the code loader 122 uploads details of which pre-stored data-oblivious processes to use.

The code loader 122 and the data uploader 104 comprise untrusted code or trusted code. The machine learning code is trusted code in some examples.

In the case that the output of the trusted execution environment 100 is a trained machine learning system 116, the output is sent to at least one of the entities which contributed training data (for example, server A and server B in FIG. 1). Server A is then able to provide an improved service to end user devices 114 such as for gesture recognition, text prediction for keyboards, scene reconstruction or other applications. Similarly server B is also able to provide the improved service. End user devices 114 illustrated in FIG. 1 include tablet computers, desktop computers, smart phones, laptop computers and head worn computing devices but these are examples only and are not intended to limit the scope.

In the case that the output of the trusted execution environment 100 is one or more predictions, the output is sent direct to end user devices 114 or to servers A and B.

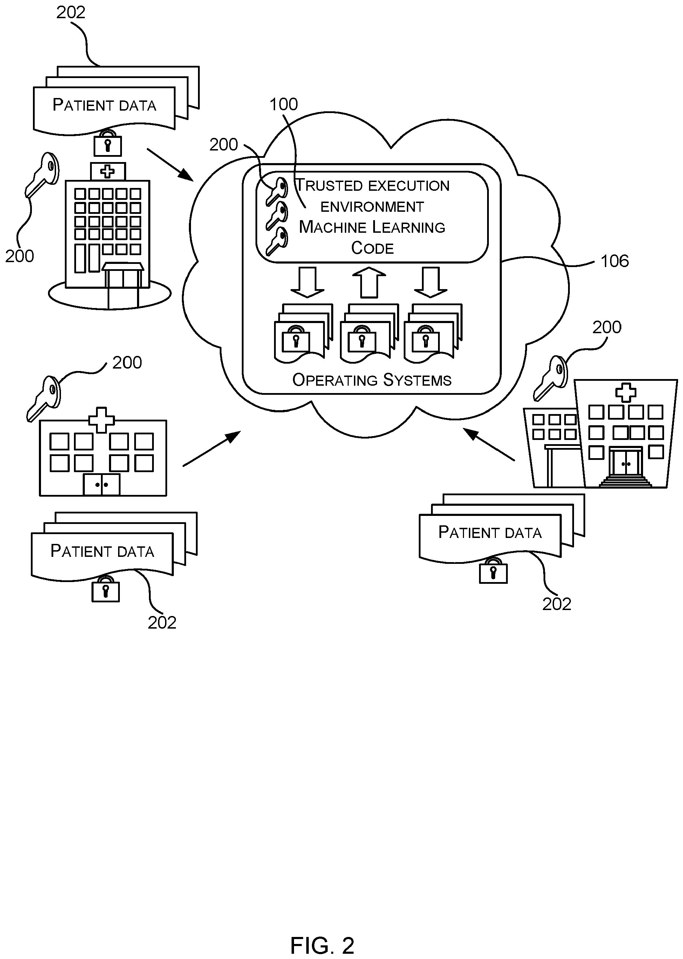

FIG. 2 is a schematic diagram of another privacy-preserving machine learning system comprising a data center 106 in the cloud where the data center has a secure trusted execution environment 100 storing machine learning code. Three hospitals each have confidential patient data 202 encrypted using a hospital-specific key 200 with the hospital-specific keys being shared with the secure trusted execution environment. The operating system of the data center receives uploads of the confidential patient data 202 from each hospital and stores this in the trusted execution environment 100. The trusted execution environment decrypts the patient data using the keys 200 and executes the machine learning code. This is achieved in a data-oblivious manner as described in more detail below. The results of the machine learning are encrypted and shared with the hospitals.

Alternatively, or in addition, the functionality of the data uploader 104, code loader 122, and trusted execution environment 100 described herein is performed, at least in part, by one or more hardware logic components. For example, and without limitation, illustrative types of hardware logic components that are optionally used include Field-programmable Gate Arrays (FPGAs), Application-specific Integrated Circuits (ASICs), Application-specific Standard Products (ASSPs), System-on-a-chip systems (SOCs), Complex Programmable Logic Devices (CPLDs), Graphics Processing Units (GPUs).

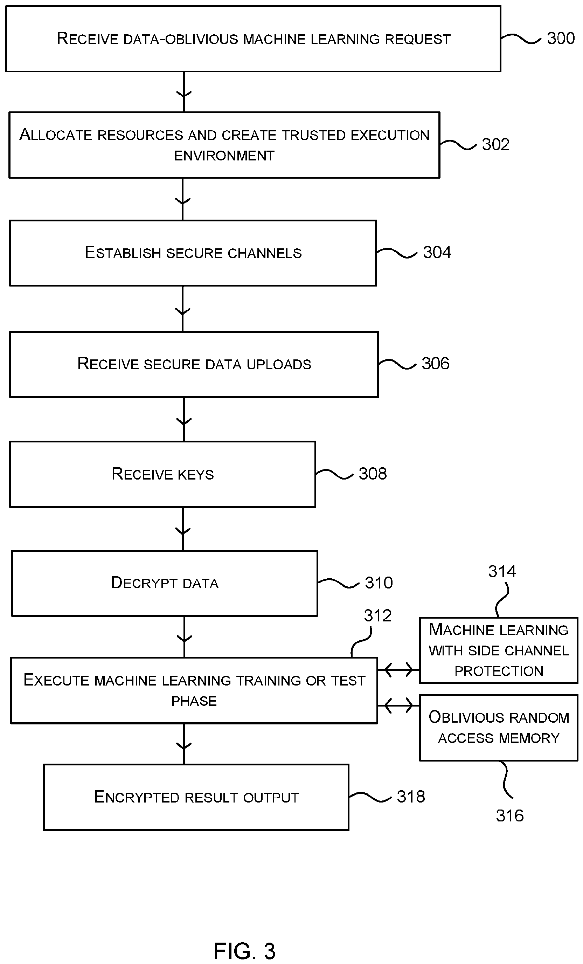

FIG. 3 is a flow diagram of a method of operation of a privacy-preserving machine learning system such as that of FIG. 1 or FIG. 2. The data center receives 300 a data-oblivious machine learning request, for example, from server A in the deployment of FIG. 1. The request comprises code and static data, where the static data comprises a list of parameters which can be made public (i.e. parameters whose values are not desired to be kept confidential) and, where there are two or more parties contributing data to a training phase of a machine learning process, the identities of the parties. The code comprises machine learning code to be executed in the data center. For example, where there are two or more parties sharing the results of the machine learning, the machine learning code has been agreed upon by the parties.

A code loader at the data center allocates 302 resources in the data center to be used for executing the machine learning code and storing data, and it creates at least one trusted execution environment with that code and data.

The data center establishes 304 a secure channel with the entities (such as server A) associated with the data-oblivious machine learning request. The data center then receives secure data uploads 306 over the secure channel(s). The uploaded data comprises training data and/or test data for use with the machine learning code. The uploaded data is secure, for example by being encrypted by a secret key generated by the entity making the data available for upload. The secret key is shared with the trusted execution environment which receives 308 the key using the secure channel.

The trusted execution environment decrypts the data 310 using the key(s) it received and executes 312 machine learning training or test phase processes according to the code uploaded by the code-loader. The trusted execution environment executes the machine learning code in a data-oblivious manner either by using oblivious random access memory 316 or by using machine learning processes that have side channel protection 314. The output of the data-oblivious machine learning process is encrypted and output 318 from the data center to one or more of the parties, such as server A in the example of FIG. 1 or end user devices 114 in the example of FIG. 1.

Oblivious random access memory (ORAM) is an interface between a protected central processing unit (CPU) and a physical random access memory (RAM). This interface executes a process which preserves the input-output behavior of an algorithm executing on the CPU, but ensures that the distribution of memory access patterns (reads/writes to the RAM) carried out by the algorithm executing on the CPU are independent of the memory access patterns of the algorithm. For example, a simple ORAM implementation may achieve this by scanning through the entire RAM for each read operation and for each write operation. This introduces significant time overheads for each memory operation. In a similar manner, ORAM is used to hide patterns of disk accesses and patterns of network accesses.

In some examples the machine learning code is annotated to indicate which of its data is private or not and a component is used to automatically generate new machine learning code that does not leak information about the annotated private data. The component in some examples comprises ORAM as an underlying block along with sorting and hardware implementation features. This type of approach is workable for a limited number of algorithms and for algorithms where it is workable, it is not as efficient as the examples described herein where the machine learning algorithms themselves are designed from the outset to be privacy preserving in an efficient manner.

A machine learning process is an operation for updating data structures in the light of training data using learning objectives, or for accessing learnt data from data structures using test data instances. A machine learning process with side channel protection, is one where the training and/or test phase operation is configured such that the memory accesses, disk accesses or network accesses carried out as part of the operation, do not leak confidential data..

In the examples described herein the data-oblivious machine learning 312 is shown to be data-oblivious in the following way. A simulator program is created which gives patterns of memory accesses, patterns of disk accesses and patterns of network accesses from the same distribution of accesses as the one produced from the machine learning 312 and is created given only values of specified public parameters (which it is acceptable to make public) and no other information about the confidential data. A test is carried out to see if an adversary can guess whether it is interacting with the simulator program or with the data-oblivious machine learning 312 by observing the pattern of memory accesses, disk accesses or network accesses. If the adversary guesses correctly with probability at most ½ plus a negligible advantage, then the machine learning 312 is data-oblivious. This test was carried out for each of the embodiments described herein and was successful in showing the embodiments to be data oblivious.

Embodiments of machine learning with side channel protection 314 are now described. In these embodiments the training and/or test phase operation is configured such that the memory accesses, disk accesses or network accesses carried out as part of the operation, do not leak confidential data. This is achieved through the use of one or more oblivious primitives. An oblivious primitive is a basic operation comprising reading and/or writing to memory, disk or network and which is configured to hide patterns of memory, disk or network access. An oblivious primitive is an operation comprising instructions in a low level programming language in which there is a strong or one to one correspondence between the language and the machine code instructions of the processor supporting the trusted execution environment. Oblivious primitives are used as building blocks to form more complex data-oblivious operations.

In the case of primitive operations for assignments and comparisons, an oblivious primitive is an operation with no data-dependent branches and which does not reveal which input is used to produce its output, which is put in a private register of the trusted execution environment secure memory region. An example of two oblivious primitives is omove() and ogreater() which comprise the following Intel x86-64 instructions in the case of 64-bit integers:

ogreater(x, y)

| | |
|------|---------|
| mov | rcx, x |
| mov | rdx, y |
| cmp | rcx, rdx |
| setg | al |
| retn | |

When the ogreater() primitive is executed the value of x is moved into the register rcx, the value of y is moved into the register rdx, a comparison of the values at the registers rcx and rdx is made, and the conditional instruction setg puts the greater of the two values (x and y) into the register al. The value in register al is returned.

omove(cond, x, y)

| | |
|------|-----------|
| mov | rcx, cond |

(continued)

| mov | rdx, x |
|---|---|
| mov | rax, y |
| test | rcx, rcx |
| cmovnz | rax, rdx |
| retn | |

When the omove() primitive is executed the value of cond is moved into the register rcx, the value of x is moved into the register rdx, the value of y is moved into the register rax, a test is made on the contents of register rcx and the conditional instruction cmovnz puts the

The omove() and ogreater() primitives are used together to implement an oblivious min() function which takes two integers x and y and returns the smaller of the two. The instructions in the oblivious min() function are:

```
int min(int x, int y) {
                 bool getX = oless(x, y);
                 return omove(getX, x, y);
       }
```

In this example the oless() obliviously evaluates the guard x<y and omove() obliviously returns either x or y, depending on that guard.

More complex primitives are built that work on arbitrary, user defined types. An example is omoveEx() which is an extended version of omove() used to conditionally assign any type of variable and which acts to repeatedly apply omove(). Depending on the size of the given type, omoveEx() iteratively uses the 64-bit integer and 256-bit vector version of omove().

In order to obliviously access arrays, the algorithms described herein are able to build on the omoveEx() primitive to scan the entire array while effectively only reading or writing a single element at a private index.

In some examples the oblivious array accesses are optimized by scanning arrays at cache-line granularity (e.g., 64-byte granularity) rather than at element or byte granularity. Where an adversary can at best observe memory accesses at cache-line granularity this type of approach is possible and gives significant technical benefits of a faster, better privacy-preserving computer. It is recognized herein that it is realistic to assume that an adversary can at best observe memory accesses at cache-line granularity where the trusted execution environment is implemented using a trusted processor package.

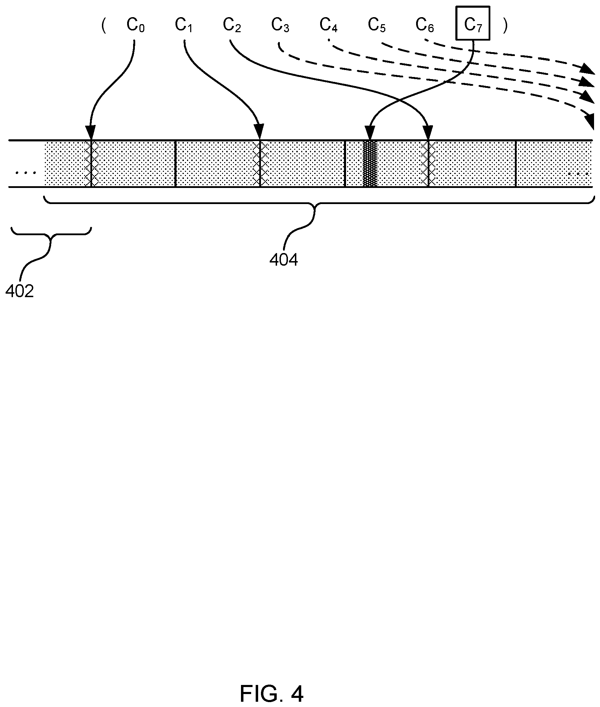

For example, scanning at cache-line granularity is achieved by using vector instructions. In an example, an instruction called vpgatherdd loads a 256-bit vector register with 32-bit integer components from eight different (dynamically chosen) memory offsets. (Note that the use of vpgatherdd is one example only which is not intended to limit the scope and other similar instructions are used in some examples.) By loading each integer from a different cache line (cache lines with a length of 64 bytes are assumed in the following), one 32-bit integer can be obliviously read from an aligned 512-byte array in a single instruction. Depending on the dynamic layout of the central processing unit (CPU) caches, this technique significantly speeds-up oblivious array accesses. For larger arrays, the technique is applied iteratively and the omove() primitive is used to extract the values of interest from the vector register. The technique is further improved by carefully loading seven out of eight components from locations that span two cache lines each and one component from the desired offset. This enables a one-instruction oblivious access to an aligned array of size 14 x 64 bytes = 896 bytes, as outlined in FIG 4. This primitive is modified to efficiently scan arrays of arbitrary size and form.

FIG. 4 shows obliviously and efficiently reading 4 bytes (32 bits) from an 896-byte memory region (e.g., an array 404) using an vpgatherdd instruction. FIG. 4 shows 32-bit integer array 404 and cache line 402. The 4 bytes of interest are loaded into the last component of the 256-bit vector (i.e., C7), all other components (i.e., C0-C6) are loaded with 4-byte values that span two cache lines in the target memory region. This way, the processor will always access 14 different cache lines (two for each component in C0-C6). At the same time, C7 is loaded from one of these 14 cache lines. An attacker who is only able to observe memory accesses at cache line-granularity is, depending on the actual hardware implementation, unlikely to be able learn from which cache line in the array C7 was loaded. This is because any cache line that C7 may be read from is necessarily accessed beforehand for one of the "dummy" components C0-C6. Thus, the read access corresponding to C7 is very likely to be served from the processor core's private cache. Reasons why the read corresponding to C7 may not be served from that cache include specific hardware implementations that do not fill vector registers in a top to bottom (i.e., going from C0 to C7). In this case, another component than C7 may be used to perform the secret read, e.g., C0 when the vector register is filled in a bottom to top manner.

As stated above, this technique can be used to obliviously read any 4 bytes out of a cache line-aligned 896-byte array with one instruction. Given this primitive, which we call oget4_896(), and omove(), one can create a function oget4() that obliviously reads 4 bytes from an array of arbitrary length. For example, the array is divided into cache line-aligned blocks of 896 bytes. There may be a head block and a tail block containing less bytes. Oget4_896() is iteratively used to obliviously read 4 bytes from each of the 896-byte blocks. Omove() is used to obliviously extract the values of interest from C7. In case a head block or a tail block with less than 896 bytes exists, a variant of oget4_896() is applied where some of the components C0-C6 are loaded from the same location. For example, a 100 bytes long array necessarily spans two 64-byte cache lines. By loading all C0-C6 from the boundary of these two cache lines, C7 can be obliviously read from any of these two cache lines.

In case more than 4 bytes are to be read from an array, the method is further refined by also using C1-C6 for loading secrets. For example, a function oget8_768() that obliviously reads 8 bytes out of a cache line-aligned 768-byte array is created by using C0-C5 for dummy accesses and C6 and C7 for secret accesses. In the extreme case, a function oget56_128() is created where the only dummy access comes from C0. These variations are combinable to efficiently and obliviously read arbitrary data from arrays of arbitrary size. It is also possible to use the same approach to efficiently and obliviously write to elements of an array. This is achieved by using the vpgatherdd instruction for reading and a similar instruction for writing.

Oblivious sorting is implemented by passing the elements to be sorted through a sorting network of carefully arranged compare-and-swap functions. Given an input size n, the sorting network layout is fixed and, hence, the memory accesses fed to the functions in each layer of the network depend only on n and not the content of the array (as opposed to, e.g., quicksort). Hence, a memory trace of the sorting operation is simulated using public parameter n and fixed element size. Optimal sorting networks are found to incur high costs. As a result, a Batcher's sorting network with running time of $O(n(\log n)^2)$ is used in practice. The oblivious primitives include a generic implementation of Batcher's sort for shuffling the data as well as re-ordering input instances to allow for efficient (algorithm-specific) access later on. The sorting network takes as input an array of user-defined type and an oblivious compare-and-swap function for this type. The oblivious compare-and-swap is implemented using the ogreater() and omove() primitives described above in some examples. A Batcher's sorting network and the Batcher's sort are well known and sometimes referred to as Batcher's odd-even mergesort. A Batcher's sorting network and the Batcher's sort is a sequence of comparisons which is set in advance, regardless of the outcome of previous comparisons. This independence of comparison sequences enables parallel execution and implementation in hardware. Optionally, some compare-and-swap functions are evaluated in parallel leading to improved performance.

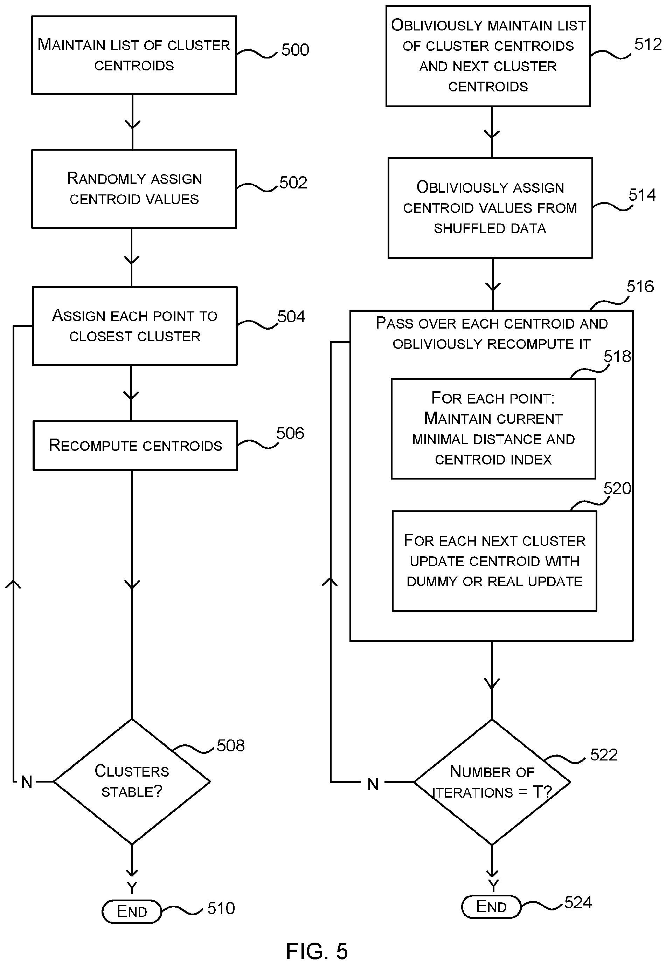

In an example, the machine learning process is configured to cluster a plurality of examples into a plurality of clusters. The machine learning process is configured to be data oblivious as described with reference to FIG. 5 which shows an example (operations 500 to 510 of FIG. 5) of a public clustering process (i.e. one where an adversary is able to find information about the examples being clustered and/or the clusters) and an example of a data-oblivious clustering process (operations 512 to 524 of FIG. 5).

In the public clustering process a processor maintains a list of cluster centroids 500 one for each of a specified number of clusters, and randomly assigns 502 a value to each centroid at the initialization of the process. Each of the data points to be clustered is then assigned to the cluster which is closest to it (using a specified distance metric such as a Euclidean distance in a multi-dimensional Euclidean space of the points), or another type of distance metric. The centroids are then recomputed 506 and a check is made to see if the clusters are stable 508. For example, the clusters are stable is the centroids do not change very much as a result of the recompute operation 506. If the clusters are not stable the process repeats from operation 504. If the clusters are stable the process ends 510 and the clusters are output.

The clustering process described with reference to operations 500 to 510 leaks information. This is because an adversary is able to infer some point coordinates by observing memory accesses (or disk accesses or network accesses) during the assignment operation 504, or is able to infer which cluster a point is assigned to from the point coordinates. For example, by observing computation of distance between the point and every center during operation 504. Also, in some cases an adversary is able to find intermediate cluster sizes and assignments by observing memory accesses (or disk accesses or network accesses) during the recomputation operation 506 and/or operation 504.

The oblivious clustering process (operations 512 to 524) obliviously maintains at the trusted execution environment a list of cluster centroids and next cluster centroids 512. This is done by using oblivious assignment primitives such as those described above. The next cluster centroids are the centroids of the next iteration of the process. The oblivious clustering process treats the number of points n, the number of coordinates in each point d, the number of clusters k and the number of iterations T as being public.

The oblivious clustering process obliviously assigns centroid values by shuffling the set of points which are to be clustered, and randomly selecting points from the shuffled set to be the initial centroid values. The shuffling process is a private shuffle, which re-orders the set of points randomly in a manner where the patterns of memory accesses, patterns of network accesses and patterns of disk accesses (used during the shuffling process) cannot be used to predict the set of points.

The oblivious clustering process uses an efficient streaming implementation where, for each iteration, an outer loop 516 traverses all points once, and there are successive inner loops 518, 520. Inner loop 518, for each point, maintains a current minimal distance of the point and a centroid index. Inner loop 520, for each next cluster, updates the centroid of the next cluster with a dummy or real update.

Procedure 518 is optionally carried out in parallel for each point instead of in a loop 516.

If the number of iterations has reached a specified number T (where T is public and is set by a user or preconfigured) the process ends 524 and the clusters are output. Otherwise the process makes another iteration from step 516.

The "privacy overhead" of the process of operations 512 to 524, as compared with the process of operations 500 to 510 primarily consists of oblivious assignments to loop variables which are held in registers, and to the next centroids, which are held in a cache. In particular, instead of updating statistics for only the centroid that the point belongs to, dummy updates are made to each centroid (using the omoveEx() primitive for example). In the computation of new centroids, a combination of ogreater() and omoveEx() is used to handle the case of empty clusters. These changes do not affect the asymptotical time complexity of the process.

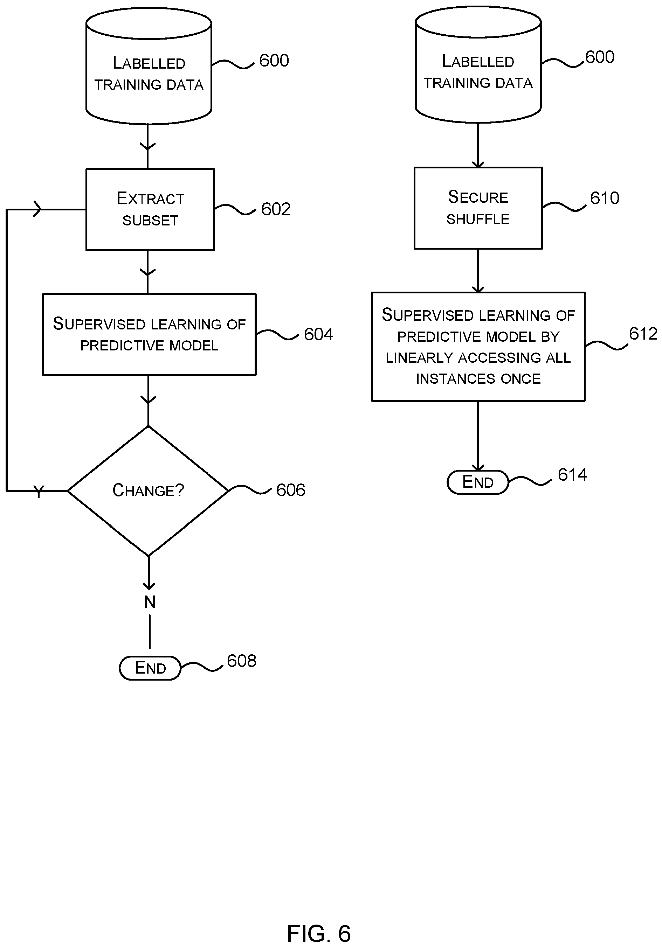

In an example, the machine learning process is configured carry out data-oblivious supervised learning of a predictive model as shown in FIG. 6 operations 600 to 614 side by side with a public supervised machine learning process (operations 600 to 614). The supervised learning comprises minimizing an objective function of the form:

$$\min_{w} \Omega(w) + \sum_{i=1}^{n} L(y_i, f_w(x_i))$$

Which is expressed in words as the minimum of the loss L summed over training instances i, where the loss is a function L which takes as arguments the ground truth value yi and the prediction produced by predictive model f given weights w and training instance $x_i$, plus a regularizer term $\Omega$ which acts on the weights to prevent overfitting. Overfitting is where the predictive model learns from the training examples so closely that it is unable to generalize to new examples which are different from the training examples.

Public supervised machine learning processes access labeled training data 600, extract a subset of that labeled training data 602 and carry out supervised learning of a predictive model 604. If the model has changed significantly 606 the process repeats with another subset being extracted from the labeled training data 600 and the supervised machine learning executed again. Once the predictive model becomes stable (does not change significantly between iterations) the process ends 608 and the model is output. However, an adversary is able to observe extraction of the subset at operation 602 and this leaks information about the labeled training data.

In various examples herein, there is a data-oblivious supervised machine learning process. Labeled training data 600 is securely shuffled 610 for example, using an oblivious implementation of Batcher's sort (as described above) or a secret shuffle such a random permutation of the training data hidden from an adversary. That is, rather than extracting a subset of the training data as at step 602, the complete set of training data 600 is securely shuffled 610. An oblivious supervised learning process then learns a predictive model by accessing substantially all instances of the training data once in order to make a training update in respect of one of the training data instances. The term "substantially all" is used to mean that the process accesses the majority of the training data instances so that an adversary is unable to predict information about the training data by observing patterns of access to the training data. If the training update resulted in a significant change 614 to the predictive model, the process repeats from operation 612. This amortizes the cost of the secure shuffle since the shuffle is performed once only. If a stopping condition is met the process ends and the model is output 616. For example, the stopping condition is a fixed number of iterations.

In some examples the predictive model is a support vector machine (SVM). A support vector machine is a representation of examples as points in space, mapped so that training examples (labeled as being in one of two or more categories) are divided by a clear gap that is as wide as possible. New examples (which are not labeled) are predicted to belong to one of the categories by mapping them into the space and seeing which side of the gap they fall on. In some cases a support vector machine operates for more than two categories by having two or more gaps in the space. In some cases a support vector machine operates as a regressor rather than a classifier.

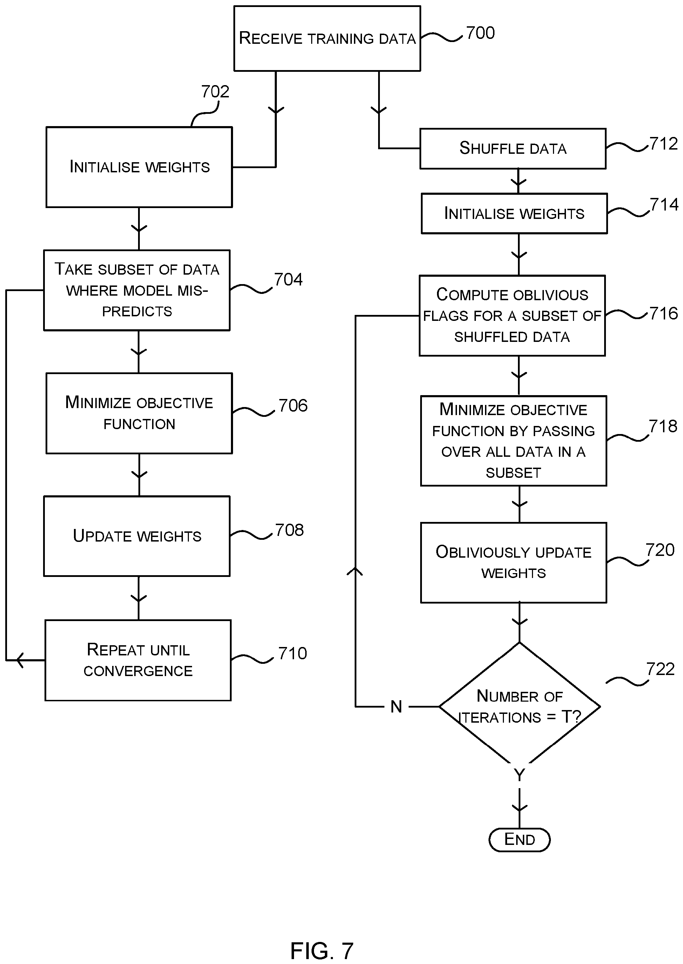

FIG. 7 is a flow diagram of a public process for training a support vector machine (operations 702 to 710) shown side by side with a data oblivious process for training a support vector machine. In this example the support vector machine is a binary classifier but this method is also applicable to situations where there are more than two classes, or where regression is used rather than classification. The process receives training data 700 such as examples which are labeled according to two possible categories. The public process initializes a weight 702 for each of the categories where the weights influence how the support vector machine maps examples into the space. The public process takes 704 a subset of the training data where the support vector machine (with the initialized weights) mis-predicts the categories.

It minimizes 706 an objective function which has the form of the objective function described above and updates the weights 708 using the outcome of the minimization. The process repeats until a stopping condition is met, such as a fixed number of epochs or convergence 710.

The process of operations 702 to 710 leaks confidential data because operation 704, which takes a subset of the training data where the model mis-predicts, reveals the state of the current model to the adversary. Also, the process of minimizing the objective function involves patterns of memory accesses which reveal information about the training data. The process of updating the weights 708 also involves patterns of memory accesses which reveal information about the weights.

The private support vector machine process (operations 712 to 722) shuffles the training data 700 as described above with reference to FIG. 6. It initializes the weights 714 , sequentially reads a subset of shuffled data and rather than updating the model only for mis-predicted examples (as at operation 704) it computes flags 716 in an oblivious manner for each example in a subset, where the flags indicate whether a training example is mis-predicted by the current model or not. The objective function is minimized by making a pass over substantially all the training data in a subset 718 using the flags to indicate whether to make a real or a dummy action so that patterns of memory accesses, patterns of disk accesses and patterns of network accesses are masked. This is done using oblivious primitives such as the ogreater(), omin() and omove() primitives described above. The private process obliviously updates the weights at operation 720 for example, using the oblivious assignment primitives described above. The process repeats 722 until a stopping condition is met, such as a fixed number of epochs..

In some examples the trusted execution environment executes a neural network in an oblivious manner, either to train the neural network or to use the neural network at test time to compute predictions.

A neural network is a collection of nodes interconnected by edges and where there are weights associated with the nodes and/or edges. During a training phase the weights are updated by minimizing a training objective (such as that described above for supervised learning in general) in the light of training examples. In various examples, the trusted execution environment is configured to train one or more neural networks using the data oblivious supervised learning scheme of FIG. 6 above where the training data is securely shuffled. This ensures privacy of the training process as compared with neural network training processes which operate on subsets of the training data without carrying out a secure shuffle.

The trusted execution environment is configured to use data oblivious processes where neural networks compute functions using piecewise approximations. This is because it is recognized herein that neural network computation using piecewise approximations leaks parameter values to an adversary. A piecewise approximation is a description of a function which assumes the function is made up of an ordered sequence of sections or segments where the individual segments or segments are individually described in a simpler manner than the whole function. For example, neural networks often use tanh-activation layers which are evaluated using piecewise approximations. The trusted execution environment is configured to evaluate tanh-activation layers of neural networks in a data oblivious manner by using a sequence of oblivious move primitives such as the oblivious move primitive described above. The trusted execution environment is configured to process neural networks which use piecewise approximations in a data oblivious manner by using a sequence of oblivious move primitives. This does not affect the complexity of the process and yet achieves privacy.

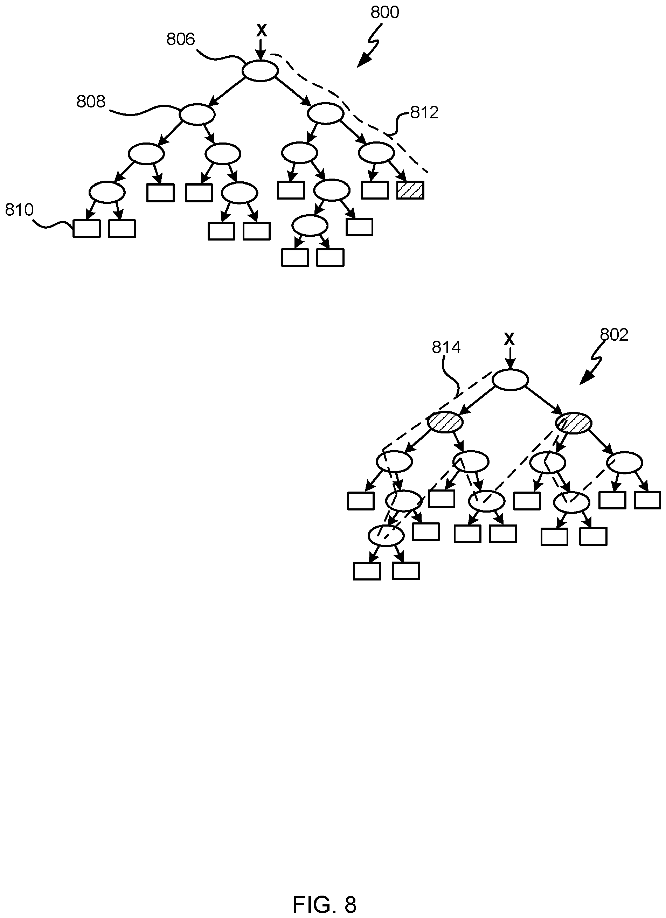

FIG 8 is a schematic diagram of a random decision tree 800 having a root node 806 connected to a plurality of internal nodes 808 which terminate in leaf nodes 810. During training the structure of the tree is learnt as well as parameters of binary tests to be carried out at the internal nodes and data is accumulated at the leaf nodes. At test time, a new example is presented to the root node and is passed from the root node to a node in the next layer of internal nodes, according to the results of applying the new example to the test associated with the root node. This process is repeated so that the example is passed along a path through the tree according to the results of the tests. The example eventually reaches a single leaf node and the data stored at the leaf node during training is retrieved and used to compute a prediction. In the example of FIG. 8 a path 812 is indicated by a dotted line from the root node 806 to a leaf node which is cross hatched of tree 800.

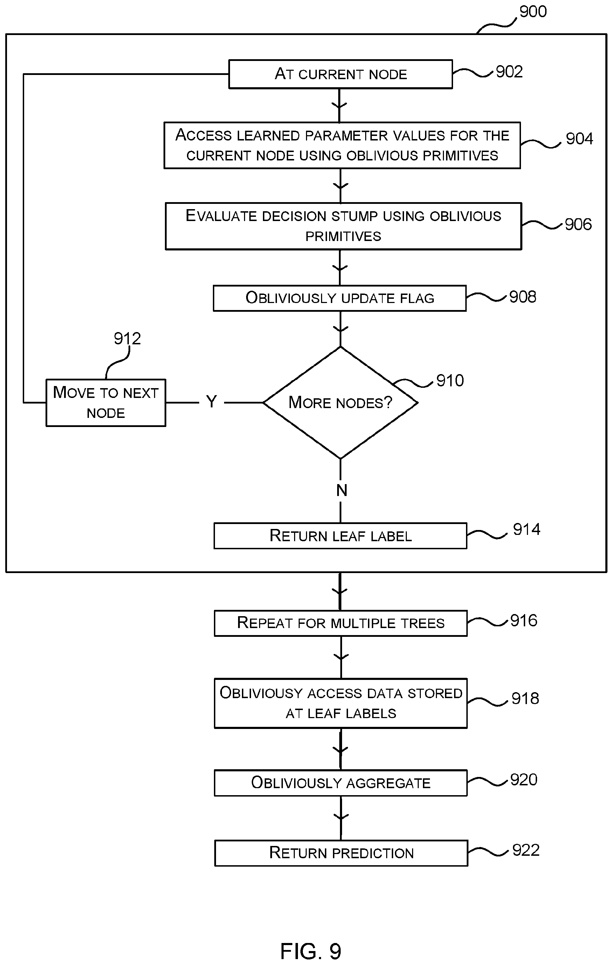

The test time process of evaluating the decision tree leaks data to an adversary about the structure of the tree, the parameters of the internal nodes, and about the new example itself. To address this, the data center of FIGs 1 and 2 is configured to use a decision tree evaluation process which has side channel protection. An example of this type of process is described with reference to the second random decision tree 802 of FIG. 8 and with reference to FIG. 9.

In order to conceal the path taken through the tree, the process traverses the entire tree (or substantially the entire tree) so that substantially every node is touched once for each new test time example. The term "substantially every" is used to mean that all or almost all of the nodes are traversed so that an adversary cannot infer the path taken through the tree by observing patterns of memory accesses. The nature of the search path taken can be depth first, breadth first, or a variation of these. For example, a depth first path is indicated in tree 802 by the dotted line 814. It is found that using a breadth first search direction in combination with an efficient array scanning technique is beneficial. In particular, the process uses the optimized oget() primitive described above to efficiently scan every level (or layer) of the tree while traversing it. (The second level of tree 802 has cross hatched nodes in FIG. 8.) For this, the tree is laid out in memory in such a way that each of its levels is stored as a coherent array of nodes. In summary the trusted execution environment stores the decision tree as a plurality of arrays of nodes and evaluates the decision tree by traversing the tree and scanning the arrays.

With reference to FIG. 9 a new test time example is input to the root node of a random decision tree and at this current node 902 the trusted execution environment accesses 904 learned parameter values for the current node from memory by using oblivious primitives such as those described above. The trusted execution environment evaluates 906 the new test time example with respect to a decision stump associated with the current node using the accessed learned parameter values as part of the decision stump. The decision stump is binary test. The evaluation of the decision stump is done using oblivious primitives such as those described above. The trusted execution environment obliviously updates a flag 908 to indicate whether the current node is on the true path through the tree or not. The true path is the path such as path 812 which shows results of evaluating the new test time example on the tree. In an optimized variant, the trusted execution environment obliviously reads only one node from each level of the tree and evaluates it.

The trusted execution environment checks 910 if there are more nodes in the tree and if so it moves to the next node 912 according to a traversal strategy. Any traversal strategy may be used such as depth first or breadth first. Once the trusted execution environment moves to the next node at operation 912 it repeats the process from operation 902 as the current node has now been updated. If there are no more nodes to traverse the leaf label is returned 914 which is the index of the leaf node at the end of the true evaluation path as indicated by the flag described above.

Operations 902 to 914 comprise a process 900 for obliviously evaluating a decision tree and these operations are also used for evaluating directed acyclic graphs in some examples. A directed acyclic graph is similar to a decision tree but with two or more of the internal nodes merged together and is often used to form compact structures for use on memory constrained devices.

The oblivious evaluation process 900 is repeated for multiple trees 916 (or multiple directed acyclic graphs) in the case of random decision forests or decision jungles.

The stored data associated with the indexed leaf nodes is obliviously accessed 918 and obliviously aggregated 920 using the oblivious primitives described above. One or more predictions computed from the aggregation of the accessed data is then returned 922.

Asymptotically using oblivious RAM based techniques is more efficient than traversing the whole tree. However, it is found that in practice, this comparison holds only for very large trees and not for small and medium trees (less than 50,000 nodes) because of the hidden constants in the asymptotical analysis that ignores them. In various examples the trusted execution environment is configured to carry out data oblivious matrix factorization. Matrix factorization is a process for taking a large matrix, which may be sparsely filled, and computing two matrices from which the large matrix is formed. This is useful in many application domains such as, recommender systems where movies are recommended to users for example, topic models for finding topics that occur in a document corpus, probabilistic latent semantic analysis (PLSA) and others. Because the data used in matrix factorization is typically confidential data there is a need to provide privacy-preserving systems such as the trusted execution environment of the data center described in FIGs. 1 and 2, to execute matrix factorization.

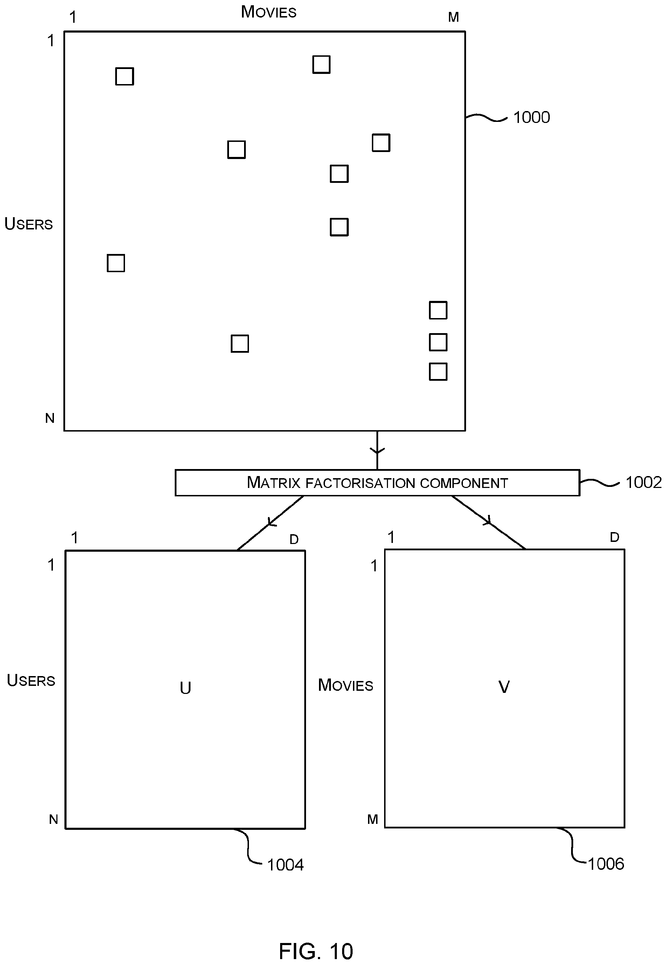

Matrix factorization embeds users and items (or other data depending on the application) into a latent vector space, such that the inner product of a user vector with an item vector produces an estimate of the rating a user would assign to the item. For example, FIG. 10 shows a matrix of users and movies 1000 where each row represents a user, each column represents a movie, and each cell has either an observed rating (indicated by small squares in FIG. 10) or a predicted rating. The predicted ratings are used to propose novel movies to the users. A matrix factorization component 1002 computes a user matrix 1004 and a movie matrix 1006 from the matrix of users and movies 1000. In the user matrix 1004 each row represents a user and each column is a dimension in the latent vector space. Entries in the matrix indicate preferences of the users with respect to the latent dimensions. In the movie matrix 1006 each row represents a movie and each column is a dimension in the latent vector space. Entries in the matrix indicate relevance of the movies with respect to the dimensions. While the individual dimensions of the latent space are not assigned fixed meanings, empirically they often correspond to interpretable properties of the items. For example, a latent dimension may correspond to the level of action the movie contains. Therefore it is desired to use privacy preserving systems to implement matrix factorization so as not to leak confidential data to adversaries. Note that the examples about matrix factorization are described with reference to users and items for the sake of example only. Other types of data are used in some cases.

The matrix factorization component 1002 operates by computing a minimization using gradient descent or any other suitable minimization process. The minimization is of an objective function of the following form:

$$\min \frac{1}{M} \sum (r_{i,j} - \langle u_i, v_j \rangle)^2 + regularizer\ term$$

which is expressed in words as minimize the regularized least squares on the known ratings r compared with the predicted ratings where $r_{i,j}$ denotes the rating given by user i to movie j, where the predicted ratings are given by the inner product of the user and movie profiles ui vj. Any suitable regularizer term is used which acts to keep the size of each entry in the user profiles and movie profiles small.

The gradient descent process iteratively updates the component matrices U and V based on the current prediction error on the input ratings. Iteration continues as long as the error decreases or for a fixed number of iterations. The error $e_{i,j}$ is computed as the difference between the observed rating and the predicted rating $r_{i,j} - \langle u_i, v_j \rangle$ and the user profile and the movie profile are updated in the opposite direction of the gradient as follows

$$u_i^{(t+1)} \leftarrow u_i^{(t)} + \gamma \left[ \sum_j e_{i,j} \, v_j^{(t)} - \lambda u_i^t \right]$$

$$v_j^{(t+1)} \leftarrow v_j^{(t)} + \gamma \left[ \sum_j e_{i,j} \, u_i^{(t)} - \mu v_j^t \right]$$

Which is expressed in words as the next value of the user profile is computed from the existing value of the user profile plus an update factor times the sum over movies rated by this user of the movie rating errors times the corresponding movie profile minus a regularizing factor times the existing user profile; and

the next value of the movie profile is computed from the existing value of the movie profile plus an update factor times the sum over users who rated this movie of the user rating errors times the corresponding user profile minus a regularizing factor times the existing movie profile.

The update process reveals confidential information about which user-item pairs appear in the input ratings. For example, assuming there is an indication of which users have seen which movies, the update process reveals the popularity of each movie, and the intersection of movie profiles between users, during the gradient update. A movie profile is a row of the movie table 1006 and a user profile is a row of the user table 1004.

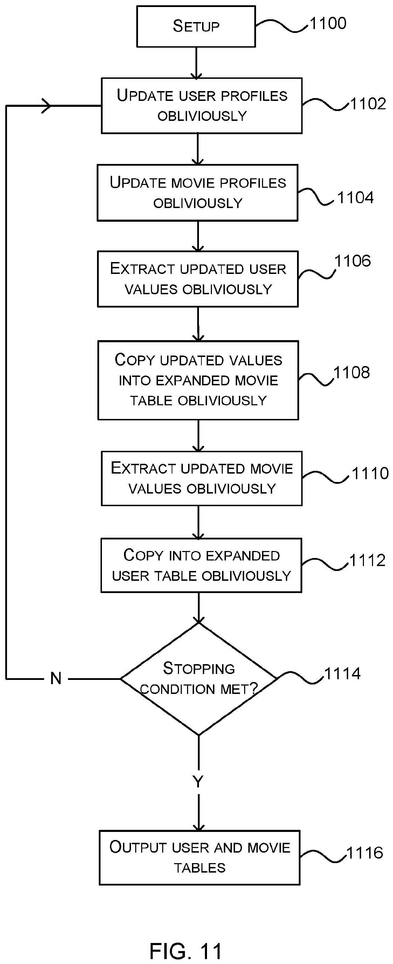

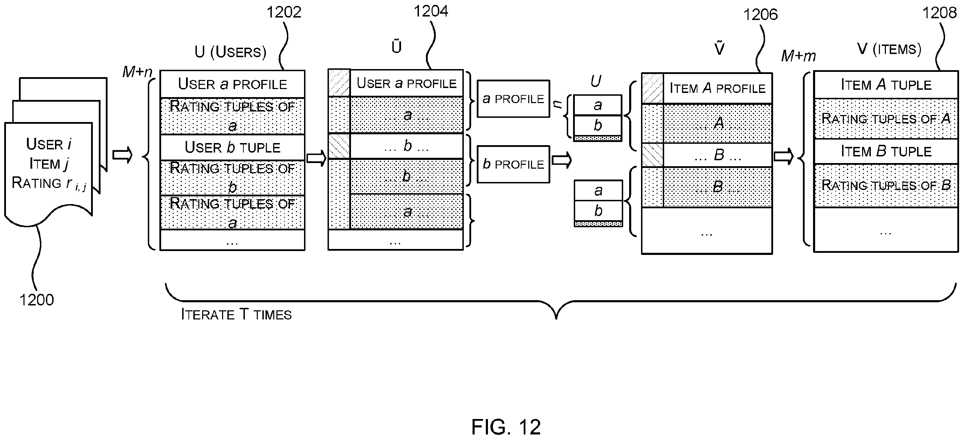

A data-oblivious matrix factorization process which uses a gradient descent update process to compute the minimization described above, is now described with reference to FIG. 11 and FIG. 12. The process assumes that the number of users, the number of movies, the number of iterations of the gradient descent are public. The process also assumes that the number of latent dimensions d and regularizer factors $\lambda$, $\mu$ are public. This example is described for the case of movies and users for clarity. However, the example is applicable to any two categories of items.

The trusted execution environment carries out a setup operation 1100 in which data structures are allocated in memory and initialized as described in more detail below. The data structures include at least an expanded user profile table 1202 (denoted by symbol U herein), and an expanded movie profile table 1208 (denoted by symbol V herein). Observed data 1200 comprising user, movie and rating observations is populated into the data structures. The expanded user profile table 1202 is thought of as comprising substantially all the user and movie profiles interleaved so that a user profile is followed by the movie profiles required to update it. In practice the expanded user profile table 1202 comprises user tuples and rating tuples, and the expanded movie profile table 1208 comprises movie tuples and rating tuples. The tuples have the same form and size so that changes in form and size are hidden from the adversary. The form is that each tuple includes a user id, a movie id, a rating, and a vector of d values. For example, user tuples are of the form (i,0,0,ui) where i is the index of the user and ui is the user profile for user i. The zeros indicate that there is no movie and no rating.

In the same way, the expanded movie profile table 1208 is thought of as comprising substantially all the user and movie profiles interleaved so that a movie profile is followed by the user profiles required to update it.

The interleaving is carefully arranged in the expanded user profile table so that a single sequential scan of rows of an expanded user profile table finds a user tuples at a fixed rate. The same type of interleaving is done in the expanded movie profile table so that a single sequential scan of rows of an expanded movie profile table finds a movie tuple at a fixed rate.

The interleaving (in the expanded user profile table) places user profiles of users with many ratings interleaved with user profiles of users with few ratings. Similarly the interleaving (in the expanded movie profile table) places movie profiles of movies with many ratings interleaved with movie profiles of movies with few ratings. This careful interleaving enables information to be hidden from an adversary during an extraction process which is described in more detail below. The careful interleaving is computed in an efficient oblivious manner as described in more detail later in this document.

The trusted execution environment obliviously computes 1102 a gradient descent update operation for the user profiles using the equation above. This is done by having the user profiles and the movie profiles in a single data structure (called an expanded user profile table herein), and interleaving the user and movie profiles within that data structure. The interleaving is done so that a single scan of the data structure, which touches substantially all rows once, computes the update by making real or dummy updates to each row using oblivious primitive operations. Because substantially all rows are touched once the adversary can't find information from the scan about which user profiles have actually been updated because he can't distinguish these from the dummy updates. Also, because the user and movie profiles are together in a single data structure the adversary can't observe which movie profiles are used to update which user profiles (and vice versa) as is the case where the user and movie profiles are kept in separate data structures. In a similar manner the movie profiles are updated obliviously 1104 and this process optionally occurs in parallel with operation 1102.

The result of operation 1102 is that the expanded user profile table is updated (denoted by symbol $\tilde{U}$) and has updated user profiles in it as well as movie profiles. However, the expanded movie profile table still has the previous user profiles in it. The trusted execution environment is therefore configured to obliviously extract 1106 the updated user profiles from the expanded user profile table and copy 1108 those obliviously into the expanded movie profile table to produce an updated expanded movie profile table 1206 (denoted by symbol $\tilde{U}$). Extraction is done by computing a single sequential scan over the expanded user profile table so as to mask patterns which might otherwise leak information. During the scan operations built from oblivious primitives such as those described earlier in this document are used. It is not necessary to sort the rows of the expanded user profile table so as to separate user profiles from movie profiles and this is a significant benefit because oblivious sorting operations are highly expensive in terms of time and memory resources. Because of the careful interleaving mentioned above, the single sequential scan, which is acting to extract the user profiles from the expanded table, spits out user profiles at a substantially fixed rate. Thus an adversary who is looking at the pattern of outputs is unable to gain information such as "user A has rated a larger number of movies than user B", or "user A has rated the most movies". The number of extracted user profiles is n as n is the number of users. Extracted user profiles are obliviously copied into the expanded movie profiles. Oblivious copying proceeds by updating the expanded movie table in chunks of size n. Define ith chunk of an expanded movie table to contain rows 1+(i-1)*n, 2+(i-1)*n,...,n + (i-1)*n. For ith chunk user profiles are copied as follows: Each row in the copy is appended with a user field of the same row in the ith chunk, the copy is then obliviously sorted, optionally in parallel, and rows are duplicated such that the correct user profile is in the correct row of the expanded movie table. Oblivious sorting here sorts n elements at a time (in chunks) which is much more efficient than sorting whole expanded movie profile.

The trusted execution environment obliviously extracts 1110 the updated movie profiles from the expanded movie profile table and obliviously copies 1112 those into the expanded user profile table. This is done by computing sequential scans over the expanded user profile table so as to mask patterns which might otherwise leak information. During the scan operations built from oblivious primitives such as those described earlier in this document are used. It is not necessary to sort the rows of the expanded movie profile table so as to separate user profiles from movie profiles and this is a significant benefit because oblivious sorting operations are highly expensive in terms of time and memory resources. Similar oblivious copying is done for expanded user table.

If the fixed number of iterations has been reached at check 1114 the trusted execution environment outputs encrypted user and movie tables 1004, 1006 after forming those from their expanded versions. If the fixed number of iterations has not been reached the process repeats from operation 1102.

The methods of FIGs. 11 and 12 are found empirically to give significantly improved running times as compared with an alternative approach which carries out an update using several sequential passes and synchronizes using a sorting network on the whole data structure, which is global matrix of size M+n+m with M rows for ratings, n rows for uses, and m rows for movies. Results are given in the table below where T is the number of iterations and the values are in seconds.

| T (number of iterations) | Methods of FIGs 11 and 12 | Alternative method |
| --- | --- | --- |
| 1 | 8 | 14 |
| 10 | 27 | 67 |
| 20 | 49 | 123 |

A detailed example of the setup operation 1100 of FIG. 11 is now given.

The user and vector profiles are initialized, and the trusted execution environment fills U and V using the input ratings.

(1) The trusted execution environment builds a sequence Lu (and symmetrically Lv) that, for every user, contains a pair of the user id i and the count $w_i$ of the movies he has rated. To this end, the user ids are extracted from the input ratings (discarding the other fields); the user ids are sorted obliviously and rewritten sequentially in an oblivious manner, so that each entry is extended with a partial count and a flag indicating whether the next user id changes; the trusted execution environment sorts them again, this time by flag then user id, to obtain Lu as the top n entries. (Directly outputting Lu during the sequential scan would reveal the counts.) For instance, after the first sorting and rewriting, the entries may be of the form $(1;1;\perp)$; $(1;2;\perp)$; $(1;3;T)$; $(2;1;\perp)$;...

(2) The trusted execution environment expands Lu (and symmetrically Lv) into a sequence $I_U$ of size M +n that includes, for every user i with wi ratings, one tuple $(i;0; \perp;k; \ell)$ for each k = O..wi, such that the values $\ell$ are ordered by the interleaving mentioned above and explained below in the section titled "equally-interleaved expansion".

(3) The trusted execution environment constructs **U** with empty user and rating profiles, as follows. The goal is to order the input ratings according to $L_U$. To this end, the trusted execution environment extends each input rating with a user-rating sequence number k = 1..wi, thereby producing M tuples $(i, j, r_{i,j}, k, \perp)$, and appends those to $I_U$. The tuples are sorted by i then k then $r_{i,j}$, so that $(i, 0, \perp, k, \ell)$ is directly followed by $(i, j, r_{i,j} ,k, \perp)$ for k = 1 ..wi; the trusted execution environment sequentially rewrites those tuples so that they become $(\_,\_,\_,\_,\_)$ directly followed by $(i, j, r_{i,j}, k, \perp)$; the trusted execution environment sorts again by $\ell$; and discards the last M dummy tuples $(\_,\_,\_,\_,\_)$.

(4) The trusted execution environment generates initial values for the user and item profiles by scanning **U** and filling in ui and vj using two pseudo-random functions (PRFs): one for $u_i$s and one for vjs. For each, user tuple (i, 0, 0, ui), the trusted execution environment uses the first PRF on inputs (i-1)d +1,..., id to generate d random numbers that are normalized and written to $u_i$. For each, rating tuple $(i, j, r_{i,j}, v_j)$, the trusted execution environment uses the second PRF on inputs (j-1)d+1,.., jd to generate d random numbers that are normalized and written to $v_j$. The trusted execution environment then uses the same two PRFs for V: the first one for rating tuples and the second one for item tuples.

A detailed example of the update operation 1102 (or 1108) of FIG. 11 is now given.

The trusted execution environment computes updated user profiles (and symmetrically item profiles) in a single scan, reading each tuple of **U** (and symmetrically V) and (always) rewriting its vector-that is, its last d values, storing ui for user tuples and vj for rating tuples.

The trusted execution environment uses 4 loop variables $u$, $\delta$, $u^o$, and $\delta^o$ each holding a $R^d$ vector, to record partially-updated profiles for the current user and for user i°. It is first explained how u and $\delta$ are updated for the current user (i). During the scan, upon reading a user tuple (i, 0, 0, ui), as is always the case for the first tuple, the trusted execution environment sets u to $u_i$ and $\delta$ to $u_i (1 - \lambda \gamma)$ and overwrites $u_i$ (to hide the fact that it scanned a user tuple). Upon reading a rating tuple $(i, j, r_{i,j}, v_j)$ for the current user i, the trusted execution environment updates $\delta$ to $\gamma v_j(r_{i,j} - \langle u, v_j \rangle) + \delta$ and overwrites vj with $\delta$. Hence, the last rating tuple (before the next user tuple) now stores the updated profile $u_i^{(t+1)}$ for the current user i.

Recall that the interleaving of users **U** splits the rating tuples for some users. In such cases, if there are ratings left to scan, the running value $\delta$ written to $v_j$ (before scanning the next user) may not contain the updated profile. Accordingly the trusted execution environment uses $i^o$, $u^o$, and $\delta^o$ to save the state of the split user while the trusted execution environment processes the next user, and restores it later as it scans the next rating tuple of the form ($i^o$, j, $n_i^o$, j, $v_j$). During the expansion of $L_U$ at most one user is split at a time so a single state copy suffices.

A detailed example of the extracting step (1104, 1110) of FIG. 11 is now given.

The update leaves the values $u_i^{(t+1)}$ scattered within $\tilde{U}$(and similarly for $v_j^{(t+1)}$ within $\tilde{V}$). The trusted execution environment extracts U from $\tilde{U}$ in two steps: (2a) the trusted execution environment rewrites all vectors (from the last to the first) to copy the updated $u_i^{(t+1)}$ profiles into all tuples with user index i; this scan is similar to the one used in step (1); then (2b) the trusted execution environment makes a split of U in n chunks of size (M+n)/n, it reads only the first and the last tuples of each chunk, and write one user profile. This step relies on a preliminary re-ordering and interleaving of users, such that the ith chunk of tuples always contains (a copy of) a user profile, and all n user profiles can be collected by reading only 2n tuples of $\tilde{U}$ (details of the expansion properties that are used here are described in the section "equally-interleaved expansion" below).

A detailed example of the copying operation 1106 (or 1112) of FIG. 11 is now given.

The trusted execution environment propagates the updated user profiles U$^{(t+1)}$ to the rating tuples in $\tilde{V}$, which still carry (multiple copies of) the user profiles U$^{(t)}$. The trusted execution environment updates $\tilde{V}$ sequentially in chunks of size n, that is, we first update the first n rows of **V,** then rows n+1 to 2n and so on until all **V** is updated, each time copying from the same n user profiles of U$^{(t+1)}$, as follows. (The exact chunk size is irrelevant, but n is asymptotically optimal.)

Recall that each rating tuple of $\tilde{V}$ is of the form (i, j, $r_{i,j}$, $u_i^t$, $\ell v_j$) where $i \neq 0$ and $\ell$ indicates the interleaved position of the tuple in **V.** To each chunk of $\tilde{V}$, the trusted execution environment appends the profiles of $U^{(t+1)}$ extended with dummy values, of the form (i, 0,_, $u_i^{(t+1)}$, _); the trusted execution environment sorts those 2n tuples by i then j, so that each tuple from $U^{(t+1)}$ immediately precedes tuples from (the chunk of) $\tilde{V}$ whose user profile must be updated by $u_i^{(t+1)}$; the trusted execution environment performs all updates by a linear rewriting; it sorts again by $\ell$, and keeps the first n tuples. Finally, $\mathbf{V}^{(t+1)}$ is the concatenation of those updated chunks.

Equally-interleaved expansion

Detail about how to obliviously and efficiently compute the interleaving in the expanded user profile and expanded movie profile tables is now given.

A weighted list L is a sequence of pairs (i;wi) with n elements i and integer weights $wi \geq 1$.

An expansion I of L is a sequence of elements of length $\sum_1^n w_i$ such that every element i occurs exactly wi times.

Let $\alpha = \sum w_i/n$ be the average weight of L and the jth chunk of I be the sub-sequence of $\lceil \alpha \rceil$ elements $l_{\lfloor (j-1)\alpha+1 \rfloor}$, ..., $l_{\lceil j\alpha \rceil}$.

I equally interleaves L when all its elements can be collected by selecting one element from each chunk.

For example, for L = (a,4), (b,1), (c,1), every chunk has $\alpha = 2$ elements. The expansion I = a,b,a,c,a,a equally interleaves L, as its elements a, b, and c can be chosen from its third, first, and second chunks, respectively. The expansion I' = a,a,a,a,b,c does not.

An efficient method for generating equal interleavings is now described. Since it is used as an oblivious building block, the trusted execution environments ensures that it accesses L, I and intermediate data structures in a manner that depends only on n and $M = \sum w_i$, not on the individual weights. (In matrix factorization, M is the total number of input ratings.) Note that the expansions do not involve padding, as the trusted execution environment does not require that copies of the same element are adjacent in this process).

Given a weighted list L, element i is heavy when $w_i \geq \alpha$, and light otherwise. The main idea is to put at most one light element in every chunk, filling the rest with heavy elements. The trusted execution environment proceeds in two steps: (1) reorder L so that each heavy element is followed by light elements that compensate for it; (2) sequentially produce chunks containing copies of one or two elements.

Step 1: Assume L is sorted by decreasing weights ($w_i \geq w_{i+1}$ *for i* $\in$ [1, *n* - 1]), and b is its last heavy element ($w_b \geq \alpha > w_{b+1}$). Let $\delta_i$ be the sum of differences defined as $\sum_{j\in[i,1]}(w_j - \alpha)$ for heavy elements and $\sum_{j\in[b+1,i]}(\alpha - w_j)$ for light elements. Let S be L (obliviously) sorted by $\delta_j$, breaking ties in favor of higher element indices. This does not yet guarantee that lights elements appear after the heavy element they compensate for. To this end, the trusted execution environment scans S starting from its last element (which is always the lightest), swapping any light element followed by a heavy element (so that, eventually, the first element is the heaviest).

Step 2: The trusted execution environment is configured to produce I sequentially, using two loop variables: k, the latest heavy element read so far; and w, the remaining number of copies of k to place in I. The trusted execution environment repeatedly reads an element from the re-ordered list and produces a chunk of elements. For the first element $k_l$, it produces $\alpha$ copies of $k_l$, and sets k = $k_l$ and $w = w_{k1} - \alpha$. For each light element ki, the trusted execution environment produces $w_{k_i}$ copies of $k_i$ and $\alpha - w_{k_1}$ copies of k, and it decrements w by $\alpha - w_{k_1}$. For each heavy element $k_i$, the trusted execution environment produces w copies of k and $\alpha - w$ copies of $k_i$, and it sets k = $k_i$ and $w = w_{k_i} - (\alpha - w)$.

Continuing with the example sequence L above, a is heavy, b and c are light, and $\delta_a = 2$, $\delta_b = 1$, and $\delta_c = 2$. Sorting L by $\delta$ yields (b, 1), (a,4), (c,1). Swapping heavy and light elements yields (a,4), (b,1), (c,1) and produces the expansion I = a,a,b,a,c,a.

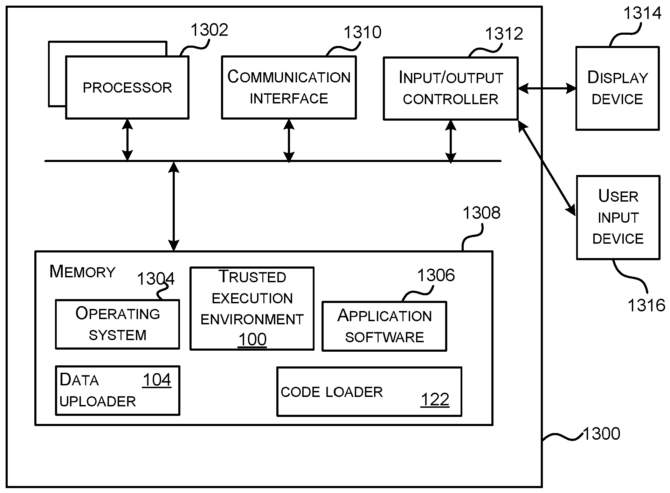

FIG. 13 illustrates various components of an exemplary computing-based device 1300 which are implemented as any form of a computing and/or electronic device, and in which embodiments of a computation unit of a data center such as the data center of FIG. 1 or FIG. 2 are implemented in some examples.

Computing-based device 1300 comprises one or more processors 1302 which are microprocessors, controllers or any other suitable type of processors for processing computer executable instructions to control the operation of the device in order to form part of a data center which gives privacy-preserving machine learning services. In some examples, for example where a system on a chip architecture is used, the processors 1302 include one or more fixed function blocks (also referred to as accelerators) which implement a part of the method of any of FIGs. 3 to 12 in hardware (rather than software or firmware). Platform software comprising an operating system 1304 or any other suitable platform software is provided at the computing-based device to enable application software 1306 to be executed on the device.

At least one of the processors 1302 is configured to implement a processor protected memory region at memory 1308 comprising trusted execution environment 100. Computer executable instructions are stored at memory 1308 to implement data uploader 104 and code loader 122.

The computer executable instructions are provided using any computer-readable media that is accessible by computing based device 1300. Computer-readable media includes, for example, computer storage media such as memory 1308 and communications media. Computer storage media, such as memory 1308, includes volatile and non-volatile, removable and non-removable media implemented in any method or technology for storage of information such as computer readable instructions, data structures, program modules or the like. Computer storage media includes, but is not limited to, random access memory (RAM), read only memory (ROM), erasable programmable read only memory (EPROM), electronic erasable programmable read only memory (EEPROM), flash memory or other memory technology, compact disc read only memory (CD-ROM), digital versatile disks (DVD) or other optical storage, magnetic cassettes, magnetic tape, magnetic disk storage or other magnetic storage devices, or any other non-transmission medium that is used to store information for access by a computing device. In contrast, communication media embody computer readable instructions, data structures, program modules, or the like in a modulated data signal, such as a carrier wave, or other transport mechanism. As defined herein, computer storage media does not include communication media. Therefore, a computer storage medium should not be interpreted to be a propagating signal per se. Although the computer storage media (memory 1308) is shown within the computing-based device 1300 it will be appreciated that the storage is, in some examples, distributed or located remotely and accessed via a network or other communication link (e.g. using communication interface 1310).

The computing-based device 1300 also comprises an input/output controller 1312 arranged to output display information to an optional display device 1314 which may be separate from or integral to the computing-based device 1300. The display information may provide a graphical user interface to display machine learning results for example. The input/output controller 1312 is also arranged to receive and process input from one or more devices, such as a user input device 1316 (e.g. a mouse, keyboard, camera, microphone or other sensor). In some examples the user input device 1316 detects voice input, user gestures or other user actions and provides a natural user interface (NUI). This user input may be used to specify training data to be used, set machine learning parameters, access machine learning results and for other purposes. In an embodiment the display device 1314 also acts as the user input device 1316 if it is a touch sensitive display device. The input/output controller 1312 outputs data to devices other than the display device in some examples, e.g. a locally connected printing device.

Any of the input/output controller 1312, display device 1314 and the user input device 1316 may comprise natural user interface (NUI) technology which enables a user to interact with the computing-based device in a natural manner, free from artificial constraints imposed by input devices such as mice, keyboards, remote controls and the like. Examples of NUI technology that are provided in some examples include but are not limited to those relying on voice and/or speech recognition, touch and/or stylus recognition (touch sensitive displays), gesture recognition both on screen and adjacent to the screen, air gestures, head and eye tracking, voice and speech, vision, touch, gestures, and machine intelligence. Other examples of NUI technology that are used in some examples include intention and goal understanding systems, motion gesture detection systems using depth cameras (such as stereoscopic camera systems, infrared camera systems, red green blue (rgb) camera systems and combinations of these), motion gesture detection using accelerometers/gyroscopes, facial recognition, three dimensional (3D) displays, head, eye and gaze tracking, immersive augmented reality and virtual reality systems and technologies for sensing brain activity using electric field sensing electrodes (electro encephalogram (EEG) and related methods).

For example, the code loader 122 such as a web server or other computing entity with instructions to receive machine learning code and store that in a protected memory region constitutes exemplary means for loading machine learning code, received from at least one of the parties, into a protected memory region at an trusted execution environment. For example, the data uploader 104 such as a web server or other computing entity with instructions to access data, shuffle and store that data in a protected memory region constitutes exemplary means for uploading confidential data, received from at least one of the parties, to the protected memory region and securely shuffling the confidential data in the protected memory region.

For example the operations in the flow diagrams, or the processor 1302 when programmed to execute the operations illustrated in the flow diagrams constitute means for executing the machine learning code using a data-oblivious procedure to process the confidential data and return the result to at least one of the parties, where a data-oblivious procedure is a process where any patterns of memory accesses, patterns of disk accesses and patterns of network accesses are such that the confidential data cannot be predicted from the patterns.

The term 'computer' or 'computing-based device' is used herein to refer to any device with processing capability such that it executes instructions. Those skilled in the art will realize that such processing capabilities are incorporated into many different devices and therefore the terms 'computer' and 'computing-based device' each include personal computers (PCs), servers, mobile telephones (including smart phones), tablet computers, set-top boxes, media players, games consoles, personal digital assistants, wearable computers, and many other devices.

The methods described herein are performed, in some examples, by software in machine readable form on a tangible storage medium e.g. in the form of a computer program comprising computer program code means adapted to perform all the operations of one or more of the methods described herein when the program is run on a computer and where the computer program may be embodied on a computer readable medium. The software is suitable for execution on a parallel processor or a serial processor such that the method operations may be carried out in any suitable order, or simultaneously.

This acknowledges that software is a valuable, separately tradable commodity. It is intended to encompass software, which runs on or controls "dumb" or standard hardware, to carry out the desired functions. It is also intended to encompass software which "describes" or defines the configuration of hardware, such as HDL (hardware description language) software, as is used for designing silicon chips, or for configuring universal programmable chips, to carry out desired functions.

Those skilled in the art will realize that storage devices utilized to store program instructions are optionally distributed across a network. For example, a remote computer is able to store an example of the process described as software. A local or terminal computer is able to access the remote computer and download a part or all of the software to run the program. Alternatively, the local computer may download pieces of the software as needed, or execute some software instructions at the local terminal and some at the remote computer (or computer network). Those skilled in the art will also realize that by utilizing conventional techniques known to those skilled in the art that all, or a portion of the software instructions may be carried out by a dedicated circuit, such as a digital signal processor (DSP), programmable logic array, or the like.

Any range or device value given herein may be extended or altered without losing the effect sought, as will be apparent to the skilled person.

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

It will be understood that the benefits and advantages described above may relate to one embodiment or may relate to several embodiments. The embodiments are not limited to those that solve any or all of the stated problems or those that have any or all of the stated benefits and advantages. It will further be understood that reference to 'an' item refers to one or more of those items.

The operations of the methods described herein may be carried out in any suitable order, or simultaneously where appropriate. Additionally, individual blocks may be deleted from any of the methods without departing from the scope of the subject matter described herein. Aspects of any of the examples described above may be combined with aspects of any of the other examples described to form further examples without losing the effect sought.

The term 'comprising' is used herein to mean including the method blocks or elements identified, but that such blocks or elements do not comprise an exclusive list and a method or apparatus may contain additional blocks or elements.

The term 'subset' is used herein to refer to a proper subset such that a subset of a set does not comprise all the elements of the set (i.e. at least one of the elements of the set is missing from the subset).

It will be understood that the above description is given by way of example only and that various modifications may be made by those skilled in the art. The above specification, examples and data provide a complete description of the structure and use of exemplary embodiments.

**Claims**

1. A multi-party privacy-preserving machine learning system comprising:

> a trusted execution environment (100) comprising at least one protected memory region;
> a code loader (122) which is configured to load machine learning code, received from at least one of the parties, into the protected memory region; and
> a data uploader (104) which is configured to upload confidential data, received from at least one of the parties, to the protected memory region;
> where the trusted execution environment (100) is configured to execute the machine learning code using a data-oblivious procedure to process the confidential data and return the result to at least one of the parties, where a data-oblivious procedure is a process where any patterns of memory accesses, patterns of disk accesses and patterns of network accesses are such that the confidential data cannot be predicted from the patterns;
> wherein the trusted execution environment (100) is configured to implement the data-oblivious procedure using oblivious random access memory to access the confidential data, and wherein the machine learning code is adapted to use the oblivious random access memory; or

wherein the trusted execution environment (100) is configured to implement the data-oblivious procedure using combinations of one or more data oblivious primitives, wherein a data-oblivious primitive is an operation with no data-dependent branches and which does not reveal which input is used to produce its output.

2. The multi-party privacy-preserving machine learning system of claim 1 wherein the trusted execution environment (100) is configured to execute the machine learning code either to train a machine learning system or to use an already trained machine learning system to generate predictions.

3. The multi-party privacy-preserving machine learning system of claim 1 wherein the trusted execution environment (100) is configured to implement the data-oblivious procedure using combinations of one or more data oblivious primitives, and wherein the trusted execution environment (100) is configured to implement the data-oblivious procedure using machine learning code which is data-oblivious.

4. The multi-party privacy-preserving machine learning system of any preceding claim wherein the trusted execution environment (100) is configured to implement the data-oblivious procedure using combinations of one or more data oblivious primitives, at least one of the data-oblivious primitives being an operation to access an array by scanning the array at cache-line granularity rather than at element or byte granularity.

5. The multi-party privacy-preserving machine learning system of claim 4 wherein a vector operation is used to implement the scanning of the array at cache-line granularity.

6. The multi-party privacy-preserving machine learning system of any preceding claim where the received data comprises labeled training data, and wherein the data uploader (104) or the trusted execution environment (100) is configured to securely shuffle the labeled training data prior to execution of the machine learning code.

7. The multi-party privacy-preserving machine learning system of claim 6 wherein the secure shuffle comprises an oblivious implementation of a sorting process or a random permutation of the training data hidden from an adversary.

8. The multi-party privacy-preserving machine learning system of any preceding claim wherein the trusted execution environment (100) is configured to implement the data-oblivious procedure using combinations of one or more data oblivious primitives, and wherein the trusted execution environment (100) is configured to use a data-oblivious procedure which iteratively computes centroids of clusters of data.

9. The multi-party privacy-preserving machine learning system of any preceding claim wherein the trusted execution environment (100) is configured to implement the data-oblivious procedure using combinations of one or more data oblivious primitives, and wherein the trusted execution environment (100) is configured to use a data-oblivious procedure which iteratively computes weights of a support vector machine.

10. The multi-party privacy-preserving machine learning system of any preceding claim wherein the trusted execution environment (100) is configured to implement the data-oblivious procedure using combinations of one or more data oblivious primitives and wherein the trusted execution environment (100) is configured to use a data-oblivious procedure which computes a piece-wise approximation of a neural network transformation.

11. The multi-party privacy-preserving machine learning system of any preceding claim wherein the trusted execution environment (100) is configured to implement the data-oblivious procedure using combinations of one or more data oblivious primitives and wherein the trusted execution environment (100) is configured to use a data-oblivious procedure which computes an evaluation of a decision tree.

12. The multi-party privacy-preserving machine learning system of claim 11 wherein the trusted execution environment (100) is configured to store the decision tree as a plurality of arrays of nodes and is configured to evaluate the decision tree by traversing the tree and scanning the arrays.

13. The multi-party privacy-preserving machine learning system of any preceding claim wherein the trusted execution environment (100) is configured to implement the data-oblivious procedure using combinations of one or more data oblivious primitives and wherein the trusted execution environment (100) is configured to use a data-oblivious procedure which computes a matrix factorization by obliviously scanning at least one matrix comprising rows of user data and rows of item data, the rows being interleaved such that a scan of a column of the matrix outputs data for an individual user at a specified rate.

**14.** A method at a multi-party privacy-preserving machine learning system comprising:

loading machine learning code, received from at least one of the parties, into a protected memory region at a trusted execution environment (100);
uploading confidential data, received from at least one of the parties, to the protected memory region; and executing the machine learning code in the trusted execution environment (100) using a data-oblivious procedure to process the confidential data and return the result to at least one of the parties, where a data-oblivious procedure is a process where any patterns of memory accesses, patterns of disk accesses and patterns of network accesses are such that the confidential data cannot be predicted from the patterns;

wherein the data-oblivious procedure uses oblivious random access memory to access the confidential data, and wherein the machine learning code is adapted to use the oblivious random access memory; or wherein the data-oblivious procedure uses combinations of one or more data oblivious primitives, wherein a data-oblivious primitive is an operation with no data-dependent branches and which does not reveal which input is used to produce its output.

**Patentansprüche**

**1.** Datenschutzwahrendes maschinelles Lernsystem für mehrere Parteien, umfassend:

eine vertrauenswürdige Ausführungsumgebung (100), die mindestens einen geschützten Speicherbereich umfasst;
einen Code-Lader (122), der so ausgelegt ist, dass er Code für maschinelles Lernen, der von mindestens einer der Parteien empfangen wird, in den geschützten Speicherbereich lädt; und
einen Daten-Uploader (104), der so ausgelegt ist, dass er vertrauliche Daten, die von mindestens einer der Parteien empfangen werden, in den geschützten Speicherbereich hochlädt;
wobei die vertrauenswürdige Ausführungsumgebung (100) so ausgelegt ist, dass sie den Code für maschinelles Lernen unter Verwendung eines datenblinden Vorgehens ausführt, um die vertraulichen Daten zu verarbeiten und das Ergebnis an mindestens eine der Parteien zurückzugeben, wobei es sich bei einem datenblinden Vorgehen um einen Vorgang handelt, bei dem jegliche Speicherzugriffsmuster, Plattenzugriffsmuster und Netzwerkzugriffsmuster derart sind, dass die vertraulichen Daten nicht anhand der Muster vorhergesagt werden können;
wobei die vertrauenswürdige Ausführungsumgebung (100) so ausgelegt ist, dass sie das datenblinde Vorgehen unter Verwendung von blindem Direktzugriffsspeicher implementiert, um auf die vertraulichen Daten zuzugreifen, und wobei der Code für maschinelles Lernen geeignet ist, den blinden Direktzugriffsspeicher zu verwenden; oder
wobei die vertrauenswürdige Ausführungsumgebung (100) so ausgelegt ist, dass sie das datenblinde Vorgehen unter Verwendung von Kombinationen eines oder mehrerer datenblinder Primitive implementiert, wobei es sich bei einem datenblinden Primitiv um eine Operation ohne datenabhängige Zweige handelt, die nicht verrät, welche Eingabe verwendet wird, um ihre Ausgabe zu erzeugen.

**2.** Datenschutzwahrendes maschinelles Lernsystem für mehrere Parteien nach Anspruch 1, wobei die vertrauenswürdige Ausführungsumgebung (100) so ausgelegt ist, dass sie den Code für maschinelles Lernen entweder ausführt, um ein maschinelles Lernsystem zu trainieren, oder um ein bereits trainiertes maschinelles Lernsystem zu verwenden, um Vorhersagen zu generieren.

**3.** Datenschutzwahrendes maschinelles Lernsystem für mehrere Parteien nach Anspruch 1, wobei die vertrauenswürdige Ausführungsumgebung (100) so ausgelegt ist, dass sie das datenblinde Vorgehen unter Verwendung von Kombinationen eines oder mehrerer datenblinder Primitive implementiert, und wobei die vertrauenswürdige Ausführungsumgebung (100) so ausgelegt ist, dass sie das datenblinde Vorgehen unter Verwendung von Code für maschinelles Lernen implementiert, der datenblind ist.

**4.** Datenschutzwahrendes maschinelles Lernsystem für mehrere Parteien nach einem vorstehenden Anspruch, wobei die vertrauenswürdige Ausführungsumgebung (100) so ausgelegt ist, dass sie das datenblinde Vorgehen unter Verwendung von Kombinationen eines oder mehrerer datenblinder Primitive implementiert, wobei es sich bei mindestens einem der datenblinden Primitive um eine Operation handelt, um auf ein Array zuzugreifen, indem das Array auf Zwischenspeicher-Line-Granularität anstatt auf Element- oder Byte-Granularität abgetastet wird.

5. Datenschutzwahrendes maschinelles Lernsystem für mehrere Parteien nach Anspruch 4, wobei eine Vektoroperation verwendet wird, um das Abtasten des Arrays auf Zwischenspeicher-Line-Granularität zu implementieren.

6. Datenschutzwahrendes maschinelles Lernsystem für mehrere Parteien nach einem vorstehenden Anspruch, wobei die empfangenen Daten markierte Trainingsdaten umfassen, und wobei der Daten-Uploader (104) oder die vertrauenswürdige Ausführungsumgebung (100) so ausgelegt ist, dass er/sie die markierten Trainingsdaten vor der Ausführung des Codes für maschinelles Lernen sicher mischt.

7. Datenschutzwahrendes maschinelles Lernsystem für mehrere Parteien nach Anspruch 6, wobei das sichere Mischen eine blinde Implementierung eines Sortiervorgangs oder eine vor einem Gegner verborgene zufällige Permutation der Trainingsdaten umfasst.

8. Datenschutzwahrendes maschinelles Lernsystem für mehrere Parteien nach einem vorstehenden Anspruch, wobei die vertrauenswürdige Ausführungsumgebung (100) so ausgelegt ist, dass sie das datenblinde Vorgehen unter Verwendung von Kombinationen eines oder mehrerer datenblinder Primitive implementiert, und wobei die vertrauenswürdige Ausführungsumgebung (100) so ausgelegt ist, dass sie ein datenblindes Vorgehen verwendet, das Zentroide von Datenclustern iterativ berechnet.

9. Datenschutzwahrendes maschinelles Lernsystem für mehrere Parteien nach einem vorstehenden Anspruch, wobei die vertrauenswürdige Ausführungsumgebung (100) so ausgelegt ist, dass sie das datenblinde Vorgehen unter Verwendung von Kombinationen eines oder mehrerer datenblinder Primitive implementiert, und wobei die vertrauenswürdige Ausführungsumgebung (100) so ausgelegt ist, dass sie ein datenblindes Vorgehen nutzt, das Gewichtungen einer Unterstützungsvektormaschine iterativ berechnet.

10. Datenschutzwahrendes maschinelles Lernsystem für mehrere Parteien nach einem vorstehenden Anspruch, wobei die vertrauenswürdige Ausführungsumgebung (100) so ausgelegt ist, dass sie das datenblinde Vorgehen unter Verwendung von Kombinationen eines oder mehrerer datenblinder Primitive implementiert, und wobei die vertrauenswürdige Ausführungsumgebung (100) so ausgelegt ist, dass sie ein datenblindes Vorgehen verwendet, das eine stückweise Annäherung einer neuronalen Netzwerktransformation berechnet.

11. Datenschutzwahrendes maschinelles Lernsystem für mehrere Parteien nach einem vorstehenden Anspruch, wobei die vertrauenswürdige Ausführungsumgebung (100) so ausgelegt ist, dass sie das datenblinde Vorgehen unter Verwendung von Kombinationen eines oder mehrerer datenblinder Primitive implementiert, und wobei die vertrauenswürdige Ausführungsumgebung (100) so ausgelegt ist, dass sie ein datenblindes Vorgehen verwendet, das eine Auswertung eines Entscheidungsbaumes berechnet.

12. Datenschutzwahrendes maschinelles Lernsystem für mehrere Parteien nach Anspruch 11, wobei die vertrauenswürdige Ausführungsumgebung (100) so ausgelegt ist, dass sie den Entscheidungsbaum als eine Vielzahl von Knotenarrays speichert, und so ausgelegt ist, dass sie den Entscheidungsbaum durch Durchlaufen des Baums und Abtasten der Arrays auswertet.

13. Datenschutzwahrendes maschinelles Lernsystem für mehrere Parteien nach einem vorstehenden Anspruch, wobei die vertrauenswürdige Ausführungsumgebung (100) so ausgelegt ist, dass sie das datenblinde Vorgehen unter Verwendung von Kombinationen eines oder mehrerer datenblinder Primitive implementiert, und wobei die vertrauenswürdige Ausführungsumgebung (100) so ausgelegt ist, dass sie ein datenblindes Vorgehen verwendet, das eine Matrix-Faktorisierung durch blindes Abtasten mindestens einer Matrix berechnet, die Zeilen mit Benutzerdaten und Zeilen mit Elementdaten umfasst, wobei die Zeilen derart verschachtelt sind, dass eine Abtastung einer Spalte der Matrix Daten für einen einzelnen Benutzer mit einer festgelegten Rate ausgibt.

14. Verfahren an einem datenschutzwahrenden maschinellen Lernsystem für mehrere Parteien, umfassend:

Laden von Code für maschinelles Lernen, der von mindestens einer der Parteien empfangen wird, in einen geschützten Speicherbereich bei einer vertrauenswürdigen Ausführungsumgebung (100);
Hochladen von vertraulichen Daten, die von mindestens einer der Parteien empfangen werden, in den geschützten Speicherbereich; und
Ausführen des Codes für maschinelles Lernen in der vertrauenswürdigen Ausführungsumgebung (100) unter Verwendung eines datenblinden Vorgehens, um die vertraulichen Daten zu verarbeiten und das Ergebnis an mindestens eine der Parteien zurückzugeben, wobei es sich bei einem datenblinden Vorgehen um einen Vorgang handelt, bei dem jegliche Speicherzugriffsmuster, Plattenzugriffsmuster und Netzwerkzugriffsmuster derart sind, dass die vertraulichen Daten nicht anhand der Muster vorhergesagt werden können;

wobei das datenblinde Vorgehen blinden Direktzugriffsspeicher verwendet, um auf die vertraulichen Daten zuzugreifen, und wobei der Code für maschinelles Lernen geeignet ist, den blinden Direktzugriffsspeicher zu verwenden; oder

wobei das datenblinde Vorgehen Kombinationen eines oder mehrerer datenblinder Primitive verwendet, wobei es sich bei einem datenblinden Primitiv um eine Operation ohne datenabhängige Zweige handelt, die nicht verrät, welche Eingabe verwendet wird, um ihre Ausgabe zu erzeugen.

## Revendications

1. Système d'apprentissage automatique à respect de la vie privée de plusieurs parties comprenant :

   un environnement d'exécution de confiance (100) comprenant au moins une région de mémoire protégée ;
   un chargeur de code (122) qui est configuré pour charger un code d'apprentissage automatique, reçu à partir d'au moins l'une des parties, dans la région de mémoire protégée ; et
   un dispositif de téléversement de données (104) qui est configuré pour téléverser des données confidentielles, reçues à partir d'au moins l'une des parties, vers la région de mémoire protégée ;
   où l'environnement d'exécution de confiance (100) est configuré pour exécuter le code d'apprentissage automatique en utilisant une procédure ignorante des données pour traiter les données confidentielles et renvoyer le résultat à au moins l'une des parties, où une procédure ignorante des données est un procédé où des modèles d'accès à la mémoire, des modèles d'accès au disque et des modèles d'accès au réseau sont tels que les données confidentielles ne peuvent pas être prédites à partir des modèles ;
   dans lequel l'environnement d'exécution de confiance (100) est configuré pour mettre en œuvre la procédure ignorante des données en utilisant une mémoire vive ignorante pour accéder aux données confidentielles, et dans lequel le code d'apprentissage automatique est adapté pour utiliser la mémoire vive ignorante ; ou
   dans lequel l'environnement d'exécution de confiance (100) est configuré pour mettre en œuvre la procédure ignorante des données en utilisant des combinaisons d'une ou plusieurs primitives ignorantes des données, dans lequel une primitive ignorante des données est une opération sans branches dépendant des données et qui ne révèle pas quelle entrée est utilisée pour produire sa sortie.

2. Système d'apprentissage automatique à respect de la vie privée de plusieurs parties selon la revendication 1 dans lequel l'environnement d'exécution de confiance (100) est configuré pour exécuter le code d'apprentissage automatique soit pour entraîner un système d'apprentissage automatique soit pour utiliser un système d'apprentissage automatique déjà entraîné pour générer des prédictions.

3. Système d'apprentissage automatique à respect de la vie privée de plusieurs parties selon la revendication 1 dans lequel l'environnement d'exécution de confiance (100) est configuré pour mettre en œuvre la procédure ignorante des données en utilisant des combinaisons d'une ou plusieurs primitives ignorantes des données, et dans lequel l'environnement d'exécution de confiance (100) est configuré pour mettre en œuvre la procédure ignorante des données en utilisant un code d'apprentissage automatique qui est ignorant des données.

4. Système d'apprentissage automatique à respect de la vie privée de plusieurs parties selon une quelconque revendication précédente dans lequel l'environnement d'exécution de confiance (100) est configuré pour mettre en œuvre la procédure ignorante des données en utilisant des combinaisons d'une ou plusieurs primitives ignorantes des données, au moins l'une des primitives ignorantes des données étant une opération pour accéder à un réseau en balayant le réseau à une granularité de ligne de cache plutôt qu'à une granularité d'élément ou d'octet.

5. Système d'apprentissage automatique à respect de la vie privée de plusieurs parties selon la revendication 4 dans lequel une opération vectorielle est utilisée pour mettre en œuvre le balayage du réseau à une granularité de ligne de cache.

6. Système d'apprentissage automatique à respect de la vie privée de plusieurs parties selon une quelconque revendication précédente où les données reçues comprennent des données d'apprentissage étiquetées, et dans lequel le dispositif de téléversement de données (104) ou l'environnement d'exécution de confiance (100) est configuré pour mélanger de manière sécurisée les données d'apprentissage étiquetées avant l'exécution du code d'apprentissage automatique.

**7.** Système d'apprentissage automatique à respect de la vie privée de plusieurs parties selon la revendication 6 dans lequel le mélange sécurisé comprend une mise en œuvre ignorante d'un procédé de tri ou d'une permutation aléatoire des données d'apprentissage cachée à un adversaire.

**8.** Système d'apprentissage automatique à respect de la vie privée de plusieurs parties selon une quelconque revendication précédente dans lequel l'environnement d'exécution de confiance (100) est configuré pour mettre en œuvre la procédure ignorante des données en utilisant des combinaisons d'une ou plusieurs primitives ignorantes des données, et dans lequel l'environnement d'exécution de confiance (100) est configuré pour utiliser une procédure ignorante des données qui calcule de manière itérative des centroïdes de grappes de données.

**9.** Système d'apprentissage automatique à respect de la vie privée de plusieurs parties selon une quelconque revendication précédente dans lequel l'environnement d'exécution de confiance (100) est configuré pour mettre en œuvre la procédure ignorante des données en utilisant des combinaisons d'une ou plusieurs primitives ignorantes des données, et dans lequel l'environnement d'exécution de confiance (100) est configuré pour utiliser une procédure ignorante des données qui calcule de manière itérative les poids d'une machine à vecteurs de support.

**10.** Système d'apprentissage automatique à respect de la vie privée de plusieurs parties selon une quelconque revendication précédente dans lequel l'environnement d'exécution de confiance (100) est configuré pour mettre en œuvre la procédure ignorante des données en utilisant des combinaisons d'une ou plusieurs primitives ignorantes des données et dans lequel l'environnement d'exécution de confiance (100) est configuré pour utiliser une procédure ignorante des données qui calcule une approximation par morceaux d'une transformation de réseau neuronal.

**11.** Système d'apprentissage automatique à respect de la vie privée de plusieurs parties selon une quelconque revendication précédente dans lequel l'environnement d'exécution de confiance (100) est configuré pour mettre en œuvre la procédure ignorante des données en utilisant des combinaisons d'une ou plusieurs primitives ignorantes des données et dans lequel l'environnement d'exécution de confiance (100) est configuré pour utiliser une procédure ignorante des données qui calcule une évaluation d'un arbre de décision.

**12.** Système d'apprentissage automatique à respect de la vie privée de plusieurs parties selon la revendication 11 dans lequel l'environnement d'exécution de confiance (100) est configuré pour stocker l'arbre de décision en tant que pluralité de réseaux de nœuds et est configuré pour évaluer l'arbre de décision en traversant l'arbre et en balayant les réseaux.

**13.** Système d'apprentissage automatique à respect de la vie privée de plusieurs parties selon une quelconque revendication précédente dans lequel l'environnement d'exécution de confiance (100) est configuré pour mettre en œuvre la procédure ignorante des données en utilisant des combinaisons d'une ou plusieurs primitives ignorantes des données et dans lequel l'environnement d'exécution de confiance (100) est configuré pour utiliser une procédure ignorante des données qui calcule une factorisation matricielle en balayant de manière ignorante au moins une matrice comprenant des rangées de données d'utilisateur et des rangées de données d'article, les rangées étant entrelacées de telle manière qu'un balayage d'une colonne de la matrice délivre en sortie des données pour un utilisateur individuel à un taux spécifié.

**14.** Procédé au niveau d'un système d'apprentissage automatique à respect de la vie privée de plusieurs parties comprenant :

le chargement d'un code d'apprentissage automatique, reçu à partir d'au moins l'une des parties, dans une région de mémoire protégée au niveau d'un environnement d'exécution de confiance (100) ;
le téléversement de données confidentielles, reçues à partir d'au moins l'une des parties, vers la région de mémoire protégée ; et
l'exécution du code d'apprentissage automatique dans l'environnement d'exécution de confiance (100) en utilisant une procédure ignorante des données pour traiter les données confidentielles et renvoyer le résultat à au moins l'une des parties, où une procédure ignorante des données est un procédé où des modèles d'accès à la mémoire, des modèles d'accès au disque et des modèles d'accès au réseau sont tels que les données confidentielles ne peuvent pas être prédites à partir des modèles ;
dans lequel la procédure ignorante des données utilise une mémoire vive ignorante pour accéder aux données confidentielles, et dans lequel le code d'apprentissage automatique est adapté pour utiliser la mémoire vive ignorante ; ou
dans lequel la procédure ignorante des données utilise des combinaisons d'une ou plusieurs primitives ignorantes des données, dans lequel une primitive ignorante des données est une opération sans branches dépendant des données et qui ne révèle pas quelle entrée est utilisée pour produire sa sortie.

106

**DATA CENTER WITH PRIVACY**

**TRUSTED EXECUTION ENVIRONMENT 100**

**DATA-OBLIVIOUS MACHINE LEARNING**

**102**

DATA UPLOADER 104

CODE LOADER 122

TRAINED MACHINE LEARNING SYSTEM 116

A SERVER 110

B SERVER 108

TRAINED MACHINE LEARNING SYSTEM 116

B data 120

A data 118

COMMUNICATIONS NETWORK 112

114

FIG. 1

FIG. 2

RECEIVE DATA-OBLIVIOUS MACHINE LEARNING REQUEST — 300

ALLOCATE RESOURCES AND CREATE TRUSTED EXECUTION ENVIRONMENT — 302

ESTABLISH SECURE CHANNELS — 304

RECEIVE SECURE DATA UPLOADS — 306

RECEIVE KEYS — 308

DECRYPT DATA — 310

314

312

EXECUTE MACHINE LEARNING TRAINING OR TEST PHASE

MACHINE LEARNING WITH SIDE CHANNEL PROTECTION

OBLIVIOUS RANDOM ACCESS MEMORY

ENCRYPTED RESULT OUTPUT — 318

316

FIG. 3

$( \; C_0 \quad C_1 \quad C_2 \quad C_3 \quad C_4 \quad C_5 \quad C_6 \quad \boxed{C_7} \; )$

FIG. 4

FIG. 5

FIG. 6

FIG. 7

FIG. 8

900

AT CURRENT NODE — 902

ACCESS LEARNED PARAMETER VALUES FOR THE CURRENT NODE USING OBLIVIOUS PRIMITIVES — 904

EVALUATE DECISION STUMP USING OBLIVIOUS PRIMITIVES — 906

OBLIVIOUSLY UPDATE FLAG — 908

912

MOVE TO NEXT NODE — Y — MORE NODES? — 910

N

RETURN LEAF LABEL — 914

REPEAT FOR MULTIPLE TREES — 916

OBLIVIOUSY ACCESS DATA STORED AT LEAF LABELS — 918

OBLIVIOUSLY AGGREGATE — 920

RETURN PREDICTION — 922

FIG. 9

FIG. 10

FIG. 11

**FIG. 12**

1314

1302          1310          1312

| PROCESSOR | COMMUNICATION INTERFACE | INPUT/OUTPUT CONTROLLER |

DISPLAY DEVICE

1308

USER INPUT DEVICE

1316

MEMORY    1304

| OPERATING SYSTEM | TRUSTED EXECUTION ENVIRONMENT 100 | APPLICATION SOFTWARE |

1306

| DATA 104 UPLOADER | CODE LOADER 122 |

1300

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2011211692 A1
- US 2012233460 A1